(19)

Europäisches
Patentamt
European
Patent Office
Office européen
des brevets

(11) **EP 3 678 416 A1**

(12) **EUROPEAN PATENT APPLICATION**
published in accordance with Art. 153(4) EPC

(43) Date of publication:
**08.07.2020 Bulletin 2020/28**

(21) Application number: **17927472.5**

(22) Date of filing: **27.09.2017**

(51) Int Cl.:
***H04W 36/28*** (2009.01)     ***H04W 36/38*** (2009.01)

(86) International application number:
**PCT/CN2017/103829**

(87) International publication number:
**WO 2019/061115 (04.04.2019 Gazette 2019/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Huawei Technologies Co., Ltd.
Longgang District
Shenzhen, Guangdong 518129 (CN)**

(72) Inventors:
• **HAN, Jinxia
Shenzhen
Guangdong 518129 (CN)**

• **LI, Zhenyu
Shenzhen
Guangdong 518129 (CN)**
• **ZHANG, Wurong
Shenzhen
Guangdong 518129 (CN)**
• **NAN, Yang
Shenzhen
Guangdong 518129 (CN)**

(74) Representative: **Körber, Martin Hans
Mitscherlich PartmbB
Patent- und Rechtsanwälte
Sonnenstrasse 33
80331 München (DE)**

(54) **CARRIER SWITCHING METHOD ON UNLICENSED SPECTRUM, BASE STATION, AND TERMINAL DEVICE**

(57)     This application provides a carrier switching method on an unlicensed spectrum, a base station, and a terminal device. In the method, a base station performs communication with a terminal device by using a first carrier in an unlicensed spectrum, where the base station communicates with the terminal device by occupying, within a scheduling cycle, an anchor carrier and any one of a plurality of data carriers in the unlicensed spectrum, the scheduling cycle includes N time scheduling units, the anchor carrier occupies the first or last M time scheduling units of the N time scheduling units, the any data carrier occupies a time scheduling unit other than the first or last M time scheduling units in the N time scheduling units, the first carrier is the anchor carrier or the any data carrier; and the base station switches from the first carrier to a second carrier within S time scheduling units reserved in the first carrier and/or the second carrier.

FIG. 3

**Description**

**TECHNICAL FIELD**

This application relates to the field of wireless communications technologies, and in particular, to a carrier switching method on an unlicensed spectrum, a base station, and a terminal device.

**BACKGROUND**

With continuous development of wireless technologies, spectrum resources of a wireless communications system are increasingly scarce. A licensed (Licensed) frequency band can no longer meet a growing number of service requirements. More and more systems have been operating on an unlicensed (Unlicensed) frequency band, such as Wi-Fi, Bluetooth, Zigbee, or LoRa.

When the unlicensed frequency band that is used is 2.4 GHz and sub-1 GHz (a frequency band lower than 1 GHz), according to spectrum regulations of the Federal Communications Commission (Federal Communications Commission, FCC) or the European Telecommunications Standards Institute (European Telecommunications Standards Institute, ETSI), a base station and a terminal device may communicate with each other by using a frequency hopping spread spectrum (Frequency Hopping Spread Spectrum, FHSS) technology. For a narrowband system, for example, a system having an operating bandwidth equal to a frequency hopping interval, during a communication process, the base station and the terminal device perform carrier switching among a plurality of carriers for a plurality of times.

In a carrier switching manner in the prior art, time domain lengths and positions occupied by duration occupied by carrier switching respectively on a source carrier and a target carrier during the carrier switching need to be determined based on types of physical channels of the corresponding carriers before and after the carrier switching. Consequently, the switching method is complex.

**SUMMARY**

Embodiments of this application provide a carrier switching method on an unlicensed spectrum, a base station, and a terminal device, to reduce complexity of the carrier switching method.

According to a first aspect, a carrier switching method on an unlicensed spectrum is provided. The method includes: performing, by a base station, communication with a terminal device by using a first carrier in an unlicensed spectrum, where the base station communicates with the terminal device by occupying, within a scheduling cycle, an anchor carrier and any one of a plurality of data carriers in the unlicensed spectrum; the scheduling cycle includes N time scheduling units; within the scheduling cycle, the anchor carrier occupies the first or last M time scheduling units of the N time scheduling units, and the any data carrier occupies a time scheduling unit other than the first or last M time scheduling units in the N time scheduling units; and the first carrier is the anchor carrier or the any data carrier; and switching, by the base station and the terminal device, from the first carrier to a second carrier within S time scheduling units reserved in the first carrier and/or the second carrier, and continuing to communicate with the terminal device by using the second carrier, where the S time scheduling units are pre-configured by the base station, the time scheduling unit is a subframe, a slot, an OFDM symbol, or an SC-FDMA symbol, N and M are positive integers, and S is an integer greater than 0 and less than N.

According to the foregoing method, when the base station and the UE communicate with each other by occupying the anchor carrier and the plurality of data carriers in the unlicensed spectrum, the base station and/or the UE pre-reserve/pre-reserves, on a carrier in a frequency hopping communications system, a position used for carrier switching. When the base station or the UE needs to perform carrier switching, the carrier switching is performed at the reserved position without considering types of data carried on a source carrier and a target carrier, so that there is no need to distinguish between types of the source carrier and the target carrier, and complexity of the carrier switching can be reduced.

In a possible implementation, the S time scheduling units are S time scheduling units in a plurality of time scheduling units occupied by the first carrier, or the S time scheduling units are S time scheduling units in a plurality of time scheduling units occupied by the second carrier, or the S time scheduling units are S1 time scheduling units in a plurality of time scheduling units occupied by the first carrier and S2 time scheduling units in a plurality of time scheduling units occupied by the second carrier, where S is a sum of S1 and S2, and S1 and S2 are positive integers.

In a possible implementation, the S time scheduling units are the last S time scheduling units in a plurality of time scheduling units occupied by the first carrier, or the S time scheduling units are S time scheduling units that start from the first time scheduling unit in a plurality of time scheduling units occupied by the second carrier, or the S time scheduling units are the last S1 time scheduling units in a plurality of time scheduling units occupied by the first carrier and S2 time scheduling units that start from the first time scheduling unit in a plurality of time scheduling units occupied by the second carrier, where S is a sum of S1 and S2, and S1 and S2 are positive integers.

According to the foregoing method, the base station can flexibly select positions of the S time scheduling units used for the carrier switching, and flexibility of the communications system can be improved.

In a possible implementation, the positions of the S time scheduling units may be any one of the following five types of positions.

First type: When the first carrier is a data carrier and the second carrier is an anchor carrier, the S time scheduling units are the last S time scheduling units of a plurality of time scheduling units occupied by the data carrier.

Second type: When the first carrier is an anchor carrier and the second carrier is a data carrier, the S time scheduling units are the last S time scheduling units of a plurality of time scheduling units occupied by the anchor carrier, where no signal is transmitted within the last S time scheduling units of the anchor carrier, duration actually occupied by signal transmission on the anchor carrier is a difference between a window length of the anchor carrier and duration corresponding to the S time scheduling units, and the window length is duration corresponding to the M time scheduling units occupied by the anchor within the scheduling cycle.

Third type: When the first carrier is a data carrier and the second carrier is an anchor carrier, the S time scheduling units are the first S time scheduling units that start from the first time scheduling unit in a plurality of time scheduling units occupied by the anchor carrier, where no signal is transmitted within the first S time scheduling units of the anchor carrier, duration actually occupied by signal transmission on the anchor carrier is a difference between a window length of the anchor carrier and duration corresponding to the S time scheduling units, and the window length is duration corresponding to the M time scheduling units occupied by the anchor within the scheduling cycle.

Fourth type: When the first carrier is an anchor carrier and the second carrier is a data carrier, the S time scheduling units are the first S time scheduling units that start from the first time scheduling unit in a plurality of time scheduling units occupied by the data carrier.

Fifth type: When the first carrier is the anchor carrier or the second carrier is the anchor carrier, the S time scheduling units are the first S time scheduling units that start from the first time scheduling unit in a plurality of time scheduling units occupied by the anchor carrier and the last S time scheduling units of the plurality of time scheduling units occupied by the anchor carrier, where no signal is transmitted within the first S time scheduling units and the last S time scheduling units, duration actually occupied by signal transmission on the anchor carrier is a difference among a window length of the anchor carrier, the first S time scheduling units, and the last S time scheduling units, and the window length is duration corresponding to the M time scheduling units occupied by the anchor within the scheduling cycle.

In a possible implementation, the S time scheduling units may have any one of the following three specific values.

First value: Both the first carrier and the second carrier are used for uplink transmission, or both the first carrier and the second carrier are used for downlink transmission; and the S time scheduling units are at least one continuous time scheduling unit whose total duration is greater than or equal to a first threshold, where the first threshold is a larger value between first preset duration required by the base station to switch a frequency domain position and second preset duration required by the terminal device to switch a frequency domain position.

Second value: The first carrier is used for uplink transmission and the second carrier is used for downlink transmission; and the S time scheduling units are at least one continuous time scheduling unit whose total duration is greater than or equal to a sum of a first threshold and a second threshold, where the first threshold is a larger value between first preset duration required by the base station to switch a frequency domain position and second preset duration required by the terminal device to switch a frequency domain position, and the second threshold is a larger value between third preset duration required by the base station to switch from the uplink transmission to the downlink transmission and fourth preset duration required by the terminal device to switch from the uplink transmission to the downlink transmission.

Third value: The first carrier is used for downlink transmission and the second carrier is used for uplink transmission; and the S time scheduling units are at least one continuous time scheduling unit whose total duration is greater than or equal to a sum of a first threshold and a third threshold, where the first threshold is a larger value between first preset duration required by the base station to switch a frequency domain position and second preset duration required by the terminal device to switch a frequency domain position, and the third threshold is a larger value between fifth preset duration required by the base station to switch from the downlink transmission to the uplink transmission and sixth preset duration required by the terminal device to switch from the downlink transmission to the uplink transmission.

In a possible implementation, the base station and the terminal device may alternatively perform listen-before-talk detection on the second carrier, and determine whether a frequency domain resource corresponding to the second carrier is occupied, where when no frequency domain resource corresponding to the second carrier is occupied, the base station and the terminal device communicate with each other by using the second carrier, so that reliability of the communication can be ensured.

In a possible implementation, the duration corresponding to the S time scheduling units further includes duration for performing the listen-before-talk detection.

In a possible implementation, the duration of the listen-before-talk detection is a fourth threshold, and the S time scheduling units may alternatively have any one of the following three specific values.

First value: The S time scheduling units are at least one continuous time scheduling unit whose total duration is greater than or equal to a sum of the first threshold and the fourth threshold.

Second value: The S time scheduling units are at least one continuous time scheduling unit whose total duration is greater than or equal to a sum of the first threshold, the second threshold, and the fourth threshold.

Third value: The S time scheduling units are at least one continuous time scheduling unit whose total duration is greater than or equal to a sum of the first threshold, the third threshold, and the fourth threshold.

In a possible implementation, the fourth threshold is related to a type of data carried on the second carrier, where the second carrier is a data carrier, and the fourth threshold is duration in which the base station performs the listen-before-talk detection in the any data carrier; or the second carrier is the anchor carrier, and the fourth threshold is duration in which the base station performs the listen-before-talk detection on the anchor carrier, so that accuracy of the reserved S time scheduling units can be ensured.

According to a second aspect, an embodiment of this application further provides a base station. The base station has a function of implementing the base station in the foregoing method embodiment. The function may be implemented by hardware, or may be implemented by executing corresponding software by hardware. The hardware or the software includes one or more modules corresponding to the foregoing function.

In a possible implementation, a structure of the base station includes a processing unit and a transmission unit. These units may perform the corresponding functions in the foregoing method examples. Specifically, refer to the detailed description in the method examples, and details are not described herein again.

In a possible implementation, a structure of the base station includes a processor and a transceiver. The processor is configured to support the base station in performing corresponding functions in the foregoing methods. The processor is coupled to the memory, and the memory stores a program instruction and data that are necessary for the base station.

According to a third aspect, an embodiment of this application further provides a terminal device. The terminal device has a function of implementing the terminal device in the foregoing method embodiment. The function may be implemented by hardware, or may be implemented by executing corresponding software by hardware. The hardware or the software includes one or more modules corresponding to the foregoing function.

In a possible implementation, a structure of the terminal device includes a processing unit and a transmission unit. These units may perform the corresponding functions in the foregoing method examples. Specifically, refer to the detailed description in the method examples, and details are not described herein again.

In a possible implementation, a structure of the terminal device includes a processor and a transceiver. The processor is configured to support the terminal device in performing corresponding functions in the foregoing methods. The processor is coupled to the memory, and the memory stores a program instruction and data that are necessary for the terminal device.

According to a fourth aspect, an embodiment of this application further provides a wireless communications system. The communications system includes the base station according to the second aspect and the terminal device according to the third aspect.

According to a fifth aspect, an embodiment of this application further provides a computer storage medium. The storage medium stores a software program. When read and executed by one or more processors, the software program may implement the method according to any design of any aspect.

According to a sixth aspect, this application further provides a computer program product including an instruction. When run on a computer, the instruction enables the computer to perform any method according to the foregoing first aspect.

## BRIEF DESCRIPTION OF DRAWINGS

FIG. 1 is a schematic diagram of a possible frame structure of a frequency hopping communications system according to an embodiment of this application;

FIG. 2 is a schematic diagram of another possible frame structure of a frequency hopping communications system according to an embodiment of this application;

FIG. 3 is a flowchart of a carrier switching method according to an embodiment of this application;

FIG. 4A to FIG. 4C are schematic diagrams of positions of S time scheduling units during switching from an anchor carrier to a data carrier according to an embodiment of this application;

FIG. 5A to FIG. 5C are schematic diagrams of positions of S time scheduling units during switching from a data carrier to an anchor carrier according to an embodiment of this application;

FIG. 6A to FIG. 6C are schematic diagrams of a DRS window length P and duration D for sending a DRS once within a cycle when S time scheduling units are set on an anchor carrier according to an embodiment of this application;

FIG. 7A and FIG. 7B are schematic diagrams of reserving, on a carrier, a position used for LBT detection according to an embodiment of this application;

FIG. 8A to FIG. 8F are schematic diagrams of frequency domain positions during carrier switching and LBT detection according to an embodiment of this application;

FIG. 9 is a flowchart of sending data in a wireless communications system in prior art;

FIG. 10 is a schematic diagram of reserving S OFDM symbols on an anchor carrier according to an embodiment of this application;

FIG. 11 is a schematic structural diagram of a base station according to an embodiment of this application;

FIG. 12 is a schematic structural diagram of a terminal device according to an embodiment of this application;

FIG. 13 is another schematic structural diagram of a base station according to an embodiment of this application; and

FIG. 14 is another schematic structural diagram of a terminal device according to an embodiment of this application.

## DESCRIPTION OF EMBODIMENTS

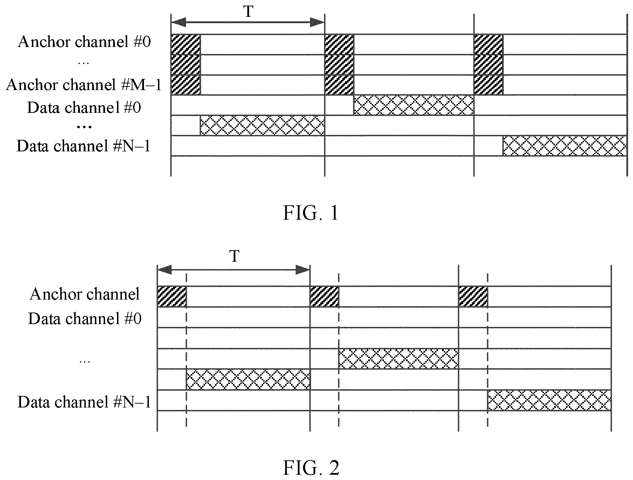

Embodiments of this application provide a carrier switching method, and the method is applied to a frequency hopping communications system. FIG. 1 is a schematic diagram of a possible frame structure of a frequency hopping communications system according to an embodiment of this application. The frame structure includes frames of M anchor (anchor) channels and frames of N data channels. Frequency hopping cycles of the anchor channels are T, the cycles T include sending duration of the M anchor (anchor) channels and sending duration of one data channel, and the M anchor channels are frequency division multiplexed, that is, the sending duration of the M anchor channels occupies a same time domain resource and different frequency domain resources within one frequency hopping cycle. The frequency hopping cycle may also be understood as an anchor channel occupancy period or a DRS signal sending period. Each frequency hopping cycle of a base station includes the sending duration of the anchor channels and the sending duration of one data channel.

It can be learned from the frame structure shown in FIG. 1 that the frequency hopping communications system includes the M anchor channels and the N data channels. The data channel is used to carry uplink and downlink information, such as downlink control information, downlink data information, and uplink data information. The anchor channel is used by the base station to send a discovery reference signal (discovery reference signal, DRS). For example, the discovery reference signal includes but is not limited to a primary synchronization signal (Primary Synchronization Signal, PSS), a secondary synchronization signal (Secondary Synchronization Signal, SSS), a master information block (Master Information Block, MIB), a system information block (System Information Block, SIB), or the like. In addition, before communicating with the base station through the frequency hopping communications system, UE completes initial synchronization by obtaining the PSS signal and/or the SSS signal sent by the base station on the anchor channel, and then obtains a cell identifier of the base station and a frequency hopping format of the base station by receiving the MIB and/or the SIB on the anchor channel. The UE then switches to a corresponding data channel based on the frequency hopping format, to receive and/or send data. Correspondingly, after sending configuration information to the UE on the anchor channel, the base station also needs to jump to a corresponding data channel based on the frequency hopping format, to send data to the UE or receive data sent by the UE. It is assumed that during a time interval, sending cycles T of the anchor channels in FIG. 1 are respectively marked as T0, T1, T2, and the like, and T0, T1, and T2 correspond to a same time length. In the cycle T0, the base station first sends the DRS signal on the anchor channel, and then switches to any data channel based on the frequency hopping format, to send/receive data information. In the cycle T1, the base station first switches from a corresponding data channel in T0 to the anchor channel, and then switches from the anchor channel to any data channel based on the frequency hopping format. The foregoing process is performed repeatedly. For a UE side, after performing the initial synchronization and receiving information of the MIB and/or the SIB on the anchor channel, the UE switches to the data channel based on the frequency hopping format, to send/receive the data information. It is assumed that UE switches from the anchor channel to the data channel in T0. In the cycle T1, the UE may switch from the data channel corresponding to the cycle T0 to the anchor channel of the cycle T1, or may switch from the data channel corresponding to the cycle T0 to the data channel of the cycle T1. If the UE switches from the data channel corresponding to the cycle T0 to the data channel of the cycle T1, no data is received and sent by the UE within duration occupied by the anchor channel in the cycle T1. The channel/carrier switching method described below is applicable to an iterative process in which the UE switches from the anchor channel corresponding to the cycle T0 to the data channel corresponding to the cycle T0, and then switches from the data channel corresponding to the cycle T0 to the anchor channel of the cycle T1 and then to the data channel of the cycle T1, or is applicable to an iterative process in which the UE switches from the anchor channel corresponding to the cycle T0 to the data channel corresponding to the cycle T0, switches from the data channel corresponding to the cycle T0 to the data channel of the cycle T1, and then switches from the data channel corresponding to the cycle T1 to the data channel of the cycle T2. T0, T1, and T2 are provided herein by example only, and in an actual solution, different cycles are a time-continuous process, that is, T0, T1, T2, T3 ...

In this embodiment of this application, assuming that a usable spectral bandwidth is Y and both a bandwidth of each anchor channel and a bandwidth of each data channel are x in the frequency hopping communications system corresponding to the frame structure shown in FIG. 1, the entire spectral bandwidth may be divided into L channels, where $L = \left\lfloor \dfrac{Y}{x} \right\rfloor$. It should be noted that a quantity Q of channels that are actually used may be less than L. For example, when the frequency hopping communications system is applied to an unlicensed frequency band of 2.4 GHz or sub-1 GHz, assuming that a quantity M of the anchor channels is equal to 1, Q only needs to be greater than or equal to 16. For example, in a possible configuration, Y = 83.5 MHz, x = 1.4 MHz, L= 59, M= 1, and Q = 16, a total quantity of usable anchor channels and usable data channels in the frequency hopping communications system is 16. Configuration parameters in the frequency hopping communications system are not limited in this embodiment of this application.

It should be noted that in the frequency hopping communications system corresponding to the frame structure shown in FIG. 1, there are M anchor channels, and M is a positive integer. That is, if an operating bandwidth of the base station is greater than or equal to a bandwidth corresponding to the M anchor channels, the base station may process the M anchor channels at a same moment, and the UE may process only one anchor channel at the same moment and process another anchor channel in a next anchor cycle until the M anchor channels are processed in the sending cycles of the M anchor channels, or the UE processes the M anchor channels in the sending cycle of one anchor channel. This is not limited herein. However, the base station and the UE may alternatively process only one anchor channel at the same moment. For example, if system bandwidth supported by the base station and the UE is set to a bandwidth corresponding to each channel in the frequency hopping communications system, the base station and the UE can process only one anchor channel at the same moment, and a corresponding frame structure is shown in FIG. 2. This embodiment of this application provides a carrier switching method, and the method is irrelevant to the quantity of the anchor channels. Therefore, for ease of description, in this embodiment of this application, an example in which the method is applied to a frequency hopping communications system corresponding to a frame structure shown in FIG. 2 is used for description.

Some wordings in the embodiments of this application are explained below for easy understanding of a person skilled in the art.

(1) A base station may also be referred to as a network device, and may be a device that is in an access network and that communicates with a wireless terminal device on an air interface by using one or more cells. The base station may be configured to mutually convert a received over-the-air frame and an IP packet and serve as a router between a terminal device and a remaining portion of the access network, where the remaining portion of the access network may include an IP network. The base station may further coordinate attribute management of the air interface. For example, the base station may include a long term evolution (Long Term Evolution, LTE) system or an evolved NodeB (NodeB or eNB or e-NodeB, evolutional Node B) in an evolved LTE system (LTE-Advanced, LTE-A), or may include a next generation NodeB (next generation node B, gNB) in a 5G system. This is not limited in the embodiments of this application.

(2) A terminal device includes a device that provides voice and/or data connectivity to a user, for example, may include a handheld device with a wireless connection function or a processing device connected to a wireless modem. The terminal device may communicate with a core network by using a radio access network (Radio Access Network, RAN), to exchange voice and/or data with the RAN. The terminal device may include user equipment (User Equipment, UE), a wireless terminal device, a mobile terminal device, a subscriber unit (Subscriber Unit), a subscriber station (Subscriber Station), a mobile station (Mobile Station), a mobile (Mobile), a remote station (Remote Station), an access point (Access Point, AP), a remote terminal device (Remote Terminal), an access terminal device (Access Terminal), a user terminal device (User Terminal), a user agent (User Agent), a user device (User Device), or the like. For example, the terminal device may include a mobile phone (or referred to as a "cellular" phone), a computer having a mobile terminal device, a portable, a pocket-sized, a handheld, a computer-built-in, or an in-vehicle mobile apparatus, an intelligent wearable device, or the like. For example, the terminal device may be a device such as a personal communications service (Personal Communication Service, PCS) phone, a cordless telephone set, a session initiation protocol (SIP) phone, a wireless local loop (Wireless Local Loop, WLL) station, a personal digital assistant (Personal Digital Assistant, PDA), a smartwatch, a smart helmet, smart glasses, or a smart band. The terminal device further includes a limited device such as a device with relatively low power consumption, a device with a limited storage capability, or a device with a limited computing capability. For example, the terminal device includes an information sensing device such as bar code, radio frequency identification (RFID), a sensor, a global positioning system (GPS), or a laser scanner.

(3) A channel is a carrier used to carry control information or data information in a preset frequency band. Therefore, in the embodiments of this application, "carrier" and "channel" may be used interchangeably.

(4) A time domain scheduling unit is a unit including a slot (slot), a subframe, an OFDM symbol, or an SC-FDMA symbol, or a unit including aggregation of a plurality of slots, a plurality of subframes, a plurality of OFDM symbols, or a plurality of SC-FDMA symbols.

(5) Downlink transmission means that a base station sends information on a carrier and/or a terminal device receives information on a carrier.

(6) Uplink transmission means that a terminal device sends information on a carrier and/or a base station receives information on a carrier.

(7) A "plurality of" refers to two or more. In view of this, in the embodiments of this application, the "plurality of" may also be understood as "at least two". The "and/or" describes an association relationship for describing associated objects and represents that three relationships may exist. For example, A and/or B may represent the following three cases: Only A exists, both A and B exist, and only B exists. In addition, unless specifically stated, the character "/" usually indicates an "or" relationship between the associated objects.

A carrier switching method in a frequency hopping communications system in the prior art is not applicable to a frequency hopping communications system in which both the base station and the terminal device need to perform carrier switching. In view of this, the embodiments of this application provide a carrier switching method applicable to the foregoing frequency hopping communications system. In the method, several time scheduling units used for carrier switching are pre-reserved in the anchor channel and the data channel in the frequency hopping communications system, and the several reserved time scheduling units are not used for data transmission, so that the carrier switching is performed directly on the time scheduling units when the base station or the terminal device in the frequency hopping communications system determines that it is required to switch to a next carrier for communication, thereby implementing a carrier switching process of the base station or the terminal device.

The following describes the technical solution of the embodiments of this application in detail with reference to the accompanying drawings and specific implementations of this specification. In the following described process, an example in which the technical solution provided in the embodiments of this application is applied to the frequency hopping communications system corresponding to the frame structure shown in FIG. 2, and the terminal device is UE is used.

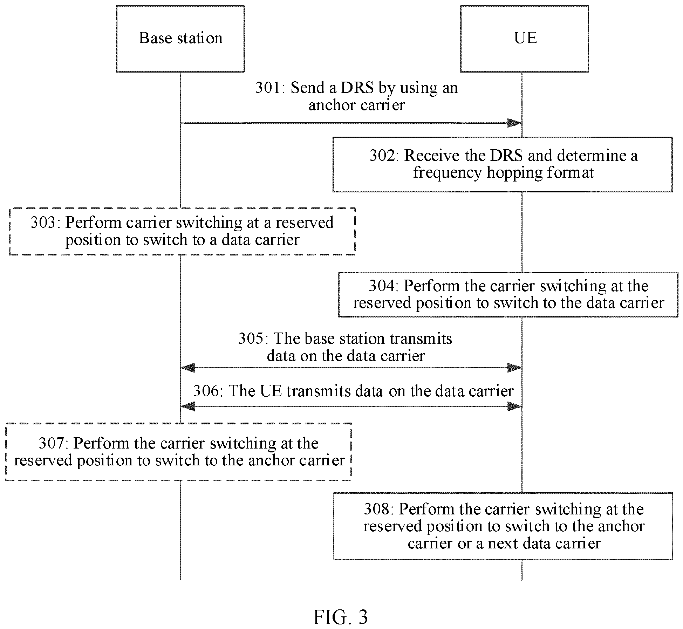

FIG. 3 is a carrier switching method according to an embodiment of this application. The following describes a procedure of the method.

Step 301: A base station sends a DRS signal by using an anchor carrier, where the DRS signal includes but is not limited to a synchronization signal and broadcast information, and the broadcast information on an anchor channel includes an MIB and/or an SIB.

Step 302: UE receives the DRS signal, determines a frequency hopping format based on the broadcast information, and determines, based on the frequency hopping format, a data carrier to which the UE needs to jump in each frequency hopping cycle.

In this embodiment of this application, frequency hopping format information may include information of a data carrier of data transmission between the base station and the UE, for example, a carrier number of a data carrier corresponding to a data channel or carrier frequency of the data carrier in any frequency hopping cycle (or briefly referred to as a cycle). Certainly, the configuration information may further include other content. This is not limited herein.

Step 303: The base station performs carrier switching at a position reserved on a data carrier to which the base station needs to jump and/or the anchor carrier.

After sending the DRS signal on the anchor carrier, the base station jumps to a corresponding data carrier to communicate with the UE.

In this embodiment of this application, before performing step 303, the base station reserves, on a corresponding carrier, a position used for the carrier switching. The following describes the position reserved by the base station for the carrier switching.

In this embodiment of this application, the reserved position may be described by using a time scheduling unit occupied by each carrier in each frequency hopping cycle T. A carrier at which the base station is currently located is referred to as a source carrier, and a carrier to which the base station is to switch is referred to as a target carrier. The reserved position used for the carrier switching may be the last S time scheduling units in a plurality of time scheduling units occupied by the source carrier, or the reserved position used for the carrier switching may be S time scheduling units that start from the first time scheduling unit in a plurality of time scheduling units occupied by the target carrier, or the reserved position used for the carrier switching may be the last S1 time scheduling units in a plurality of time scheduling units occupied by the source carrier and S2 time scheduling units that start from the first time scheduling unit in a plurality of time scheduling units occupied by the target carrier, where a sum of S1 and S2 is greater than or equal to S, and S is a positive integer.

Specifically, an example in which in the frequency hopping communications system in the embodiments of this application, the source carrier is an anchor carrier, the target carrier is a data carrier, and the reserved S time scheduling units are S OFDM symbols is used for description.

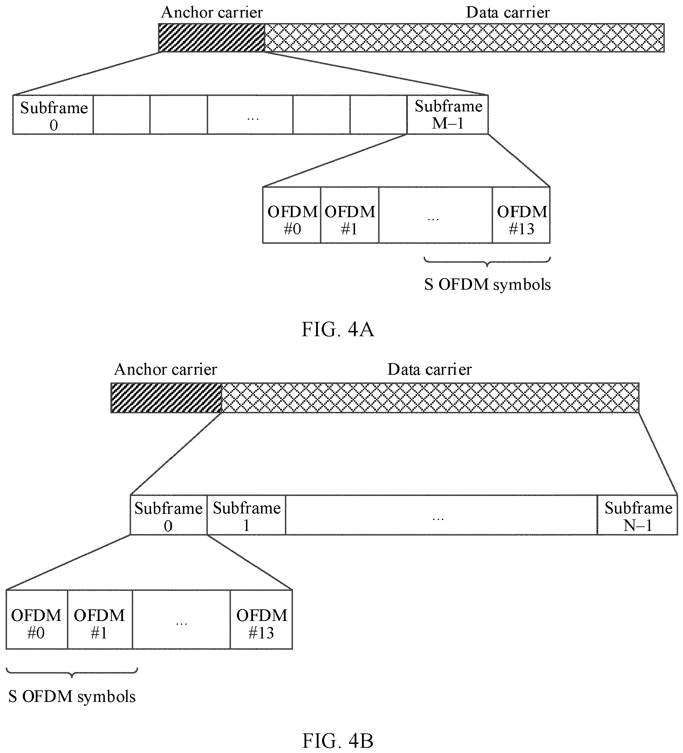

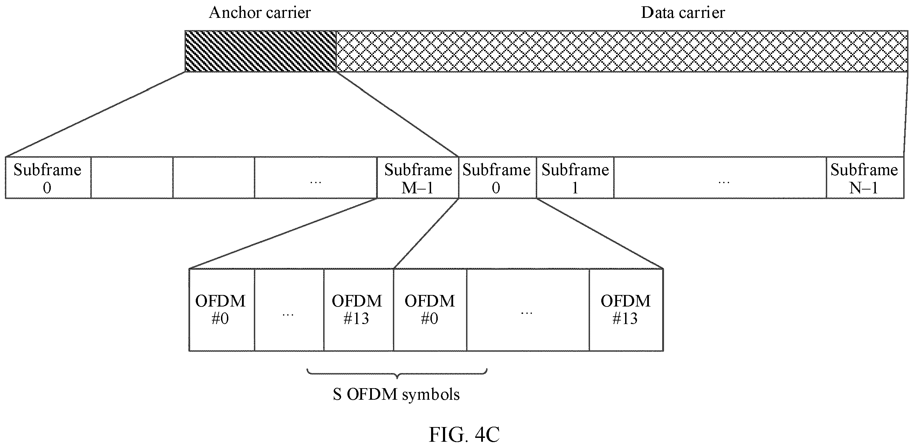

As shown in FIG. 4A, FIG. 4B and FIG. 4C, an anchor carrier occupies a total of M subframes, and a data carrier occupies a total of N subframes. Assuming that a subframe includes 14 OFDM symbols, the anchor carrier includes a total of 14*M OFDM symbols and the data carrier includes a total of 14*N OFDM symbols. As shown in FIG. 4A, the base station may set the last S OFDM symbols in the 14*M OFDM symbols included in the anchor carrier as a position used for the carrier switching. As shown in FIG. 4B, the base station may alternatively set the first S OFDM symbols in the 14*N OFDM symbols included in the data carrier as a position used for the carrier switching. Certainly, as shown in FIG. 4C, the base station may alternatively set the last S1 OFDM symbols in the 14*M OFDM symbols included in the anchor carrier and the first S2 OFDM symbols in the 14*N OFDM symbols included in the data carrier as a position used for the carrier switching.

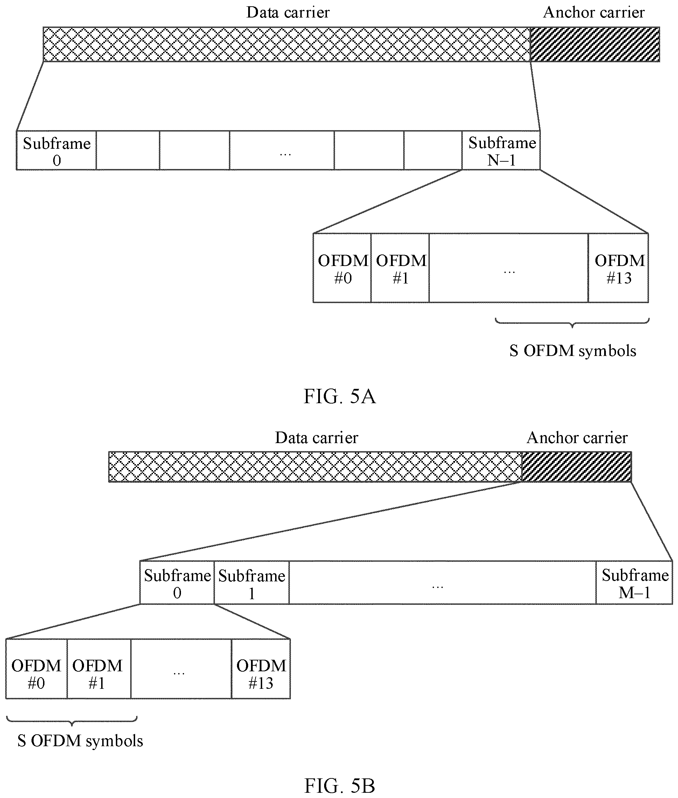

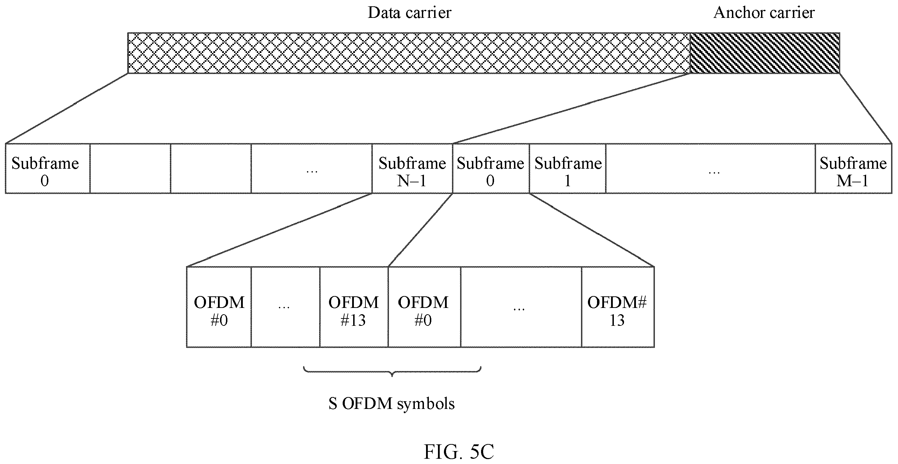

As shown in FIG. 5A, if the data carrier in FIG. 4A to FIG. 4C is the source carrier and the anchor carrier in FIG. 4A to FIG. 4C is the target carrier, the base station may set the last S OFDM symbols in the 14*N OFDM symbols included in the data carrier as a position used for the carrier switching. As shown in FIG. 5B, the base station may alternatively set the first S OFDM symbols in the 14*M OFDM symbols included in the anchor carrier as a position used for the carrier switching. As shown in FIG. 5C, the base station may alternatively set the last S1 OFDM symbols in the 14*N OFDM symbols included in the data carrier and the first S2 OFDM symbols in the 14*M OFDM symbols included in the anchor carrier as the position used for the carrier switching. In actual use, the base station may select any one of the foregoing manners in FIG. 4A to FIG. 5C to reserve the position used for the carrier switching. This is not limited herein.

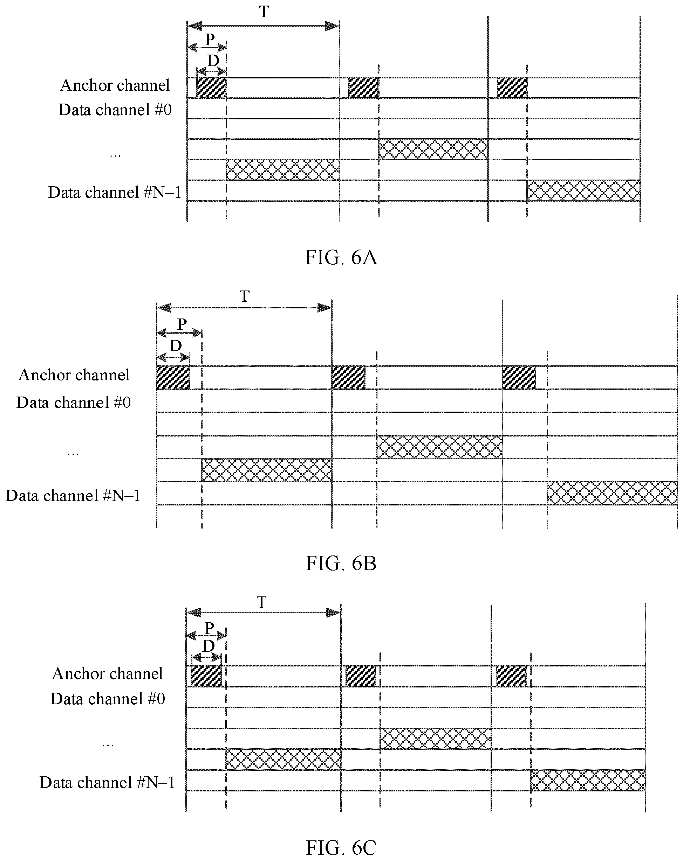

It should be noted that as shown in FIG. 6A to FIG. 6C, the DRS signal sent by the base station on the anchor carrier relates to the following two parameters: a DRS window length P and duration D for sending the DRS once, where $D \leq P$. When the base station switches from the data carrier to the anchor carrier, S OFDM symbols that are reserved on the anchor carrier for the carrier switching may be shown in FIG. 6A, where a possible end moment of the DRS signal is aligned with an end boundary of the DRS window length, and a difference between the window length P and the duration D of the DRS signal is greater than or equal to duration corresponding to the S OFDM symbols, so that the carrier switching is performed in the duration corresponding to the S OFDM symbols. When the base station switches from the anchor carrier to the data carrier, the S OFDM symbols that are reserved on the anchor carrier for the carrier switching may be shown in FIG. 6B, where a possible sending moment of the DRS signal is aligned with a starting boundary of the DRS window length, and the difference between the window length P and the duration D of the DRS signal is greater than or equal to the duration corresponding to the S OFDM symbols. Certainly, as shown in FIG. 6C, the S OFDM symbols may alternatively be reserved before and after the DRS window length P without considering types of carriers before and after the carrier switching, where a possible sending moment of the DRS signal is a corresponding moment obtained after S OFDM symbols are deviated from the starting boundary of the DRS window length, a possible end moment of the DRS signal is a corresponding moment ahead of S OFDM symbols before the end boundary of the DRS window length, and the difference between the window length P and the duration D of the DRS signal is greater than or equal to duration corresponding to 2*S OFDM symbols.

In this way, by controlling the difference between the window length P and the duration D of the DRS signal, the base station or the UE switches from the data carrier to the anchor carrier or switches from the anchor carrier to the data carrier in duration corresponding to the difference between the window length P and the duration D of the DRS signal, or switches from the data carrier to the anchor carrier and switches from the anchor carrier to the data carrier in the duration, so that no DRS signal sent on the anchor carrier can be affected and a performance requirement of the frequency hopping communications system on the anchor carrier can be ensured.

The following describes specific values of the quantity S of the OFDM symbols. In this embodiment of this application, the quantity S of the OFDM symbols may have the following three values, and the base station and the UE may determine, based on an actual switching status, a maximum value of the quantity S of the required OFDM symbols.

In this embodiment of this application, considering a time of radio frequency front-end processing, it is assumed that duration required by the base station to perform the carrier switching is t1, duration required by the base station to switch from uplink reception to downlink transmission is t2, and duration required by the base station to switch from the downlink transmission to the uplink reception is t3. In addition, it is assumed that duration required by the UE to perform the carrier switching is t4, duration required by the UE to switch from uplink transmission to downlink reception is t5, and duration required by the UE to switch from the downlink reception to the uplink transmission is t6.

It should be noted that t1 to t6 in this embodiment of this application may be converted into corresponding quantities of the OFDM symbols. Assuming that duration of one OFDM symbol is t0, calculation formulas are respectively

$$m1 = \left\lceil \frac{t1}{t0} \right\rceil, \dots, \text{ and } m6 = \left\lceil \frac{t6}{t0} \right\rceil$$ when t1 to t6 are quantities m1 to m6 of the OFDM symbols. Herein, the duration of one OFDM symbol includes a time of a cyclic prefix.

The following describes values of the quantity S of the OFDM symbols with reference to t1 to t6 described above.

In this embodiment of this application, the base station and the UE need to be synchronized when sending information on different carriers, that is, during data transmission/reception (excluding a carrier switching time), the UE and an eNB need to operate on a same carrier at any moment. Therefore, in this embodiment of this application, each switching time of the base station and the UE is unified. That is, the carrier switching time of the base station or the UE is unified as t_freqswitch=max(t1, t4), a switching time of the base station from the uplink reception to the downlink transmission or a switching time of the UE from the uplink transmission to the downlink reception is unified as an uplink-to-downlink switching time t_UtoD=max(t2, t5), and a switching time of the base station from the downlink transmission to the uplink reception or switching time of the UE from the downlink reception to the uplink transmission is unified as a downlink-to-uplink switching time t_DtoU=max(t3, t6).

The first value of the quantity S of the OFDM symbols is greater than or equal to a quantity of OFDM symbols required by the base station or the UE for the carrier switching, that is, S is greater than or equal to

$$m\_freqswitch = \left\lceil \frac{t\_freqswitch}{t0} \right\rceil.$$

For example, the base station switches from sending downlink control/data information on the anchor carrier to sending the downlink control/data information on the data carrier, or the UE switches from receiving downlink control/data information on the anchor carrier to receiving the downlink control/data information on the data carrier.

The second value of the quantity S of the OFDM symbols is greater than or equal to a sum of the quantity of the OFDM symbols required by the base station or the UE for the carrier switching and a quantity of OFDM symbols required by the base station or the UE for uplink-to-downlink switching, that is, S is greater than or equal to

$$m\_freqswitch\_UtoD = \left\lceil \frac{t\_freqswitch + t\_UtoD}{t0} \right\rceil.$$ For example, the base station switches from receiving uplink data information on the data carrier to sending downlink control information on the anchor carrier, or the UE switches from sending uplink data information on the data carrier to receiving downlink control information on the anchor carrier.

The third value of the quantity S of the OFDM symbols is greater than or equal to the quantity of the OFDM symbols required by the base station or the UE for the carrier switching or a quantity of OFDM symbols required by the base station or the UE for downlink-to-uplink switching, that is, S is greater than or equal to

$$m\_freqswitch\_DtoU = \left\lceil \frac{t\_freqswitch + t\_DtoU}{t0} \right\rceil.$$ For example, the base station switches from sending the downlink control information on the anchor carrier to receiving the uplink data information on the data carrier, or the UE switches from receiving the downlink control information on the anchor carrier to sending the uplink data information on the data carrier.

It should be noted that uplink information needs to be sent in advance when two-way transmission is performed between the base station and the UE. Therefore, in an actual frequency hopping communications system, t UtoD may have a value of 0, that is, the time is not reserved in the actual system, so that m_freqswitch_U to D may be equal to m_freqswitch.

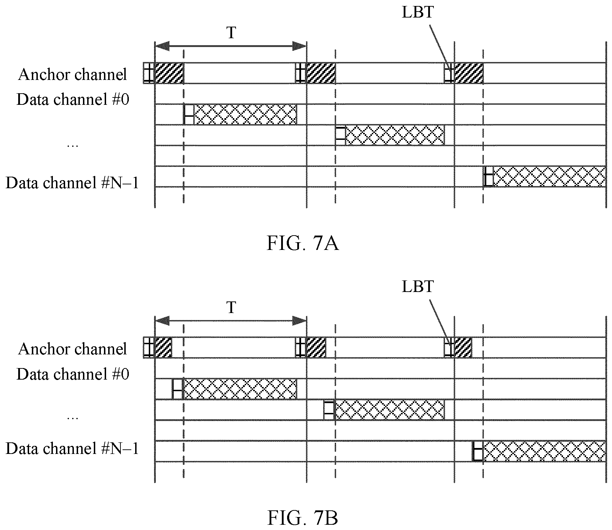

In this embodiment of this application, if the base station needs to send data on the target carrier after the carrier switching, the base station may detect, before sending the data, whether a frequency domain position corresponding to the target carrier is idle, to ensure that the UE can receive the data sent by the base station. For example, listen-before-talk (Listen Before Talk, LBT) detection may be used. The base station performs the LBT detection before sending the data on each carrier, and then transmits data by using the carrier. The duration occupied by the LBT detection may be reserved on the data carrier, as shown in FIG. 7A, or may be reserved on the anchor carrier, as shown in FIG. 7B. However, the LBT detection needs to be performed after the carrier switching, that is, a channel status of the target carrier is detected during the LBT detection. Therefore, when the values of the quantity S of the OFDM symbols are determined, duration of the LBT detection performed by the base station may further be considered.

An LBT mechanism is divided into two types: a frame based channel detection (Frame based Equipment, FBE) LBT mechanism and a load based channel detection (Load based Equipment, LBE) LBT mechanism. In an FBE-based LBT manner, a frame period is set, and clear channel assessment (Clear Channel Assessment, CCA) detection is performed at a fixed position before each frame period. Therefore, in the FBE-based LBT manner, detection duration may be set to fixed duration. For example, fixed duration for performing the FBE on a frequency domain position corresponding to the data carrier is recorded as td, and fixed duration for performing the FBE on a frequency domain position corresponding to the anchor carrier is recorded as ta. When the CCA detection is performed in an LBE-based LBT manner, detection duration is not fixed, but maximum detection duration can be limited. Therefore, duration for performing the CCA detection on a frequency domain position corresponding to each carrier in the LBE manner may alternatively be set to a fixed value. For example, fixed duration for performing the LBE on the frequency domain position corresponding to the data carrier is recorded as td1, and fixed duration for performing the LBE on the frequency domain position corresponding to the anchor carrier is recorded as ta1. The fixed duration td1 and the fixed duration ta1 may be obtained through a plurality of actual measurements. This is not limited in the embodiments of this application. To simplify this specification, in the embodiments of this application, an example in which the LBT detection is the FBE-based LBT detection is merely used for description.

Correspondingly, duration corresponding to the reserved S OFDM symbols may be greater than or equal to t freqswitch+ta, and the fourth value of the quantity S of the OFDM symbols is greater than or equal to

$$m\_freqswitch\_ta = \left\lceil \frac{t\_freqswitch+ta}{t0} \right\rceil.$$

For example, the base station switches from sending downlink data information on the data carrier to sending the downlink control information on the anchor carrier, or the UE switches from receiving downlink data information on the data carrier to receiving the downlink control information on the anchor carrier.

The duration corresponding to the reserved S OFDM symbols may be greater than or equal to t freqswitch+t UtoD+ta, and the fifth value of the quantity S of the OFDM symbols is

$$m\_freqswitch\_UtoD\_ta = \left\lceil \frac{t\_freqswitch+t\_UtoD+ta}{t0} \right\rceil$$ For example, the base station switches from receiving the uplink data information on the data carrier to sending the downlink control information on the anchor carrier, or the UE switches from sending the downlink data information on the data carrier to receiving the downlink control information on the anchor carrier.

The duration corresponding to the reserved S OFDM symbols may be greater than or equal to t_freqswitch+t_DtoU+ta, and the sixth value of the quantity S of the OFDM symbols is

$$m\_freqswitch\_DtoU\_ta = \left\lceil \frac{t\_freqswitch+t\_DtoU+ta}{t0} \right\rceil$$ For example, the base station switches from sending the downlink data information on the data carrier to receiving uplink control information on the anchor carrier, or the UE switches from receiving the downlink data information on the data carrier to sending uplink control information on the anchor carrier.

Correspondingly, the duration corresponding to the reserved S OFDM symbols may be greater than or equal to t_freqswitch+td, and the seventh value of the quantity S of the OFDM symbols is greater than or equal to $m\_freqswitch\_td = \left\lceil \frac{t\_freqswitch+td}{t0} \right\rceil$. The duration corresponding to the reserved S OFDM symbols may alternatively be greater than or equal to t freqswitch+t UtoD+td, and the eighth value of the quantity S of the OFDM symbols is $m\_freqswitch\_UtodD\_td = \left\lceil \frac{t_{freqswitch}+t\_UtoD+td}{t0} \right\rceil$. The duration corresponding to the reserved S OFDM symbols may alternatively be greater than or equal to t_freqswitch+t_DtoU+td, and the ninth value of the quantity S of the OFDM symbols is $m\_freqswitch\_DtoU\_td = \left\lceil \frac{t_{freqswitch}+t\_DtoU+td}{t0} \right\rceil$. For carrier switching statuses corresponding to the seventh value to the ninth value, refer to the foregoing description of the fourth value to the sixth value. Details are not described herein again.

It should be noted that when the base station switches from the source carrier to the target carrier, although the FBE-based LBT detection detects the frequency domain position corresponding to the target carrier, duration required by the LBT detection may be set on the source carrier, or may be set on the target carrier. This is not limited in the embodiments of this application. It should be noted that the source carrier and the target carrier are defined based on the carrier switching actually performed by the base station. For example, when the base station switches from the anchor carrier to the data carrier, the source carrier is the anchor carrier and the target carrier is the data carrier; or when the base station switches from the data carrier to the anchor carrier, the source carrier is the data carrier and the target carrier is the anchor carrier. That the duration required by the LBT detection is set on the source carrier or the target carrier only means that the LBT duration can occupy a time unit of the source carrier or the target carrier and is independent of a carrier position/channel position of the LBT detection. The following further describes carrier position of the carrier switching and the LBT detection.

Based on different positions of the S OFDM symbols reserved by the base station, the base station or the UE has different frequency domain positions when performing the carrier switching and the LBT detection. Specific cases are as follows.

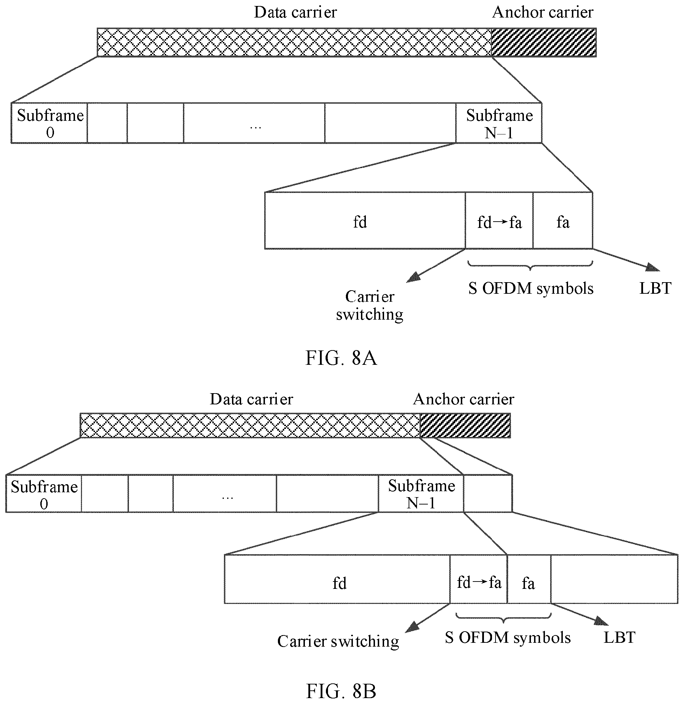

First case: The base station switches from the data carrier to the anchor carrier, and reserves, on the data carrier, a time domain position used for the carrier switching and the LBT detection. Although the LBT detection occupies the time domain position of the data carrier, the base station has switched to the frequency domain position corresponding to the anchor carrier at a time domain position corresponding to the duration ta. As shown in FIG. 8A, fd represents the frequency domain position corresponding to the data carrier, fa represents the frequency domain position corresponding to the anchor carrier, and fd→fa represents that the base station completes the switching from fd to fa within the corresponding time.

Second case: The base station switches from the data carrier to the anchor carrier, and reserves, on the data carrier, a time domain position used for the carrier switching. A quantity of OFDM symbols corresponding to the duration ta needs to be reserved before the anchor carrier. The corresponding frequency domain position of the base station during the carrier switching has no effect on the solution, and the frequency domain position of the base station after the carrier switching is the frequency domain position corresponding to the anchor carrier. As shown in FIG. 8B, fd represents the frequency domain position corresponding to the data carrier, and fa represents the frequency domain position corresponding to the anchor carrier.

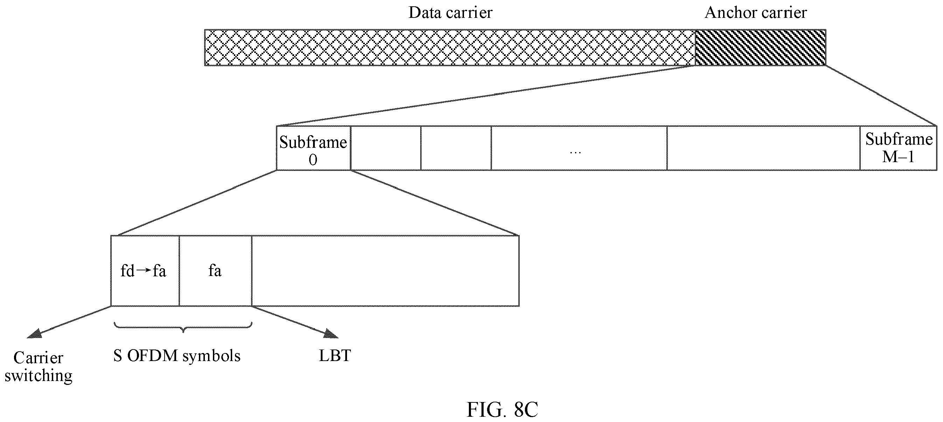

Third case: The base station switches from the data carrier to the anchor carrier, and reserves, on the anchor carrier, a time domain position used for the carrier switching and the LBT detection. The corresponding frequency domain position of the base station during the carrier switching has no effect on the solution, and the frequency domain position corresponding to the LBT detection is the frequency domain position of the anchor carrier. As shown in FIG. 8C, fd represents the frequency domain position corresponding to the data carrier, and fa represents the frequency domain position corresponding to the anchor carrier.

Fourth case: The base station switches from the data carrier to the anchor carrier, reserves, respectively on the data carrier and the anchor carrier, a part of a time domain position used for the carrier switching, where the length of the two parts of the time domain position is equal to the length of the time domain position required for the carrier switching, and reserves, on the anchor carrier, a time domain position used for the LBT detection. The corresponding frequency domain position of the base station during the carrier switching has no effect on the solution, and the frequency domain position corresponding to the LBT detection is the frequency domain position of the anchor carrier.

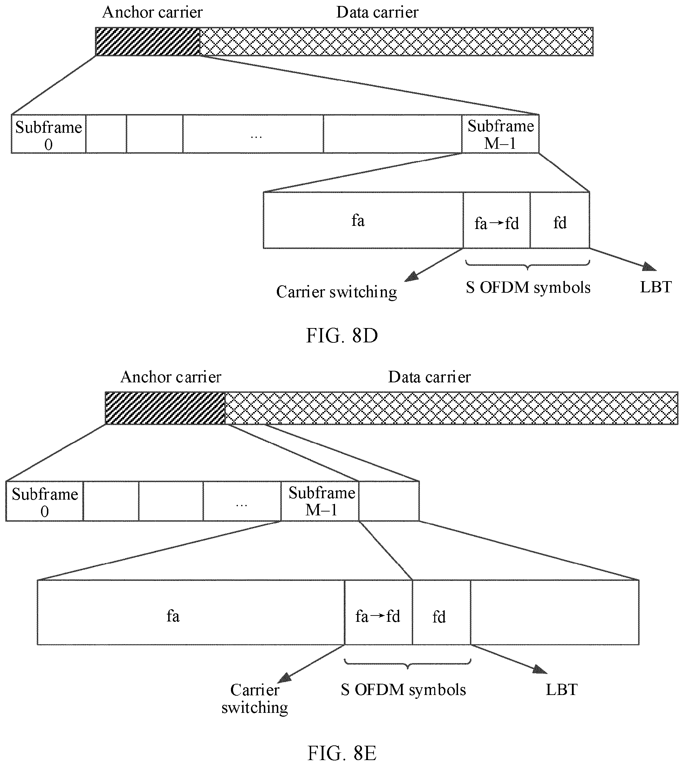

Fifth case: The base station switches from the anchor carrier to the data carrier, and reserves, on the anchor carrier, a time domain position used for the carrier switching and the LBT detection. Although the LBT detection occupies the time domain position of the anchor carrier, the base station has switched to the frequency domain position corresponding to the data carrier at a time domain position corresponding to the duration td. As shown in FIG. 8D, fd represents the frequency domain position corresponding to the data carrier, and fa represents the frequency domain position corresponding to the anchor carrier.

Sixth case: The base station switches from the anchor carrier to the data carrier, and only reserves, on the anchor carrier, a time domain position used for the carrier switching. A quantity of OFDM symbols corresponding to the duration td needs to be reserved before the data carrier. The corresponding frequency domain position of the base station during the carrier switching is not specified, and the frequency domain position of the base station after the carrier switching is the frequency domain position corresponding to the data carrier. As shown in FIG. 8E, fd represents the frequency domain position corresponding to the data carrier, and fa represents the frequency domain position corresponding to the anchor carrier.

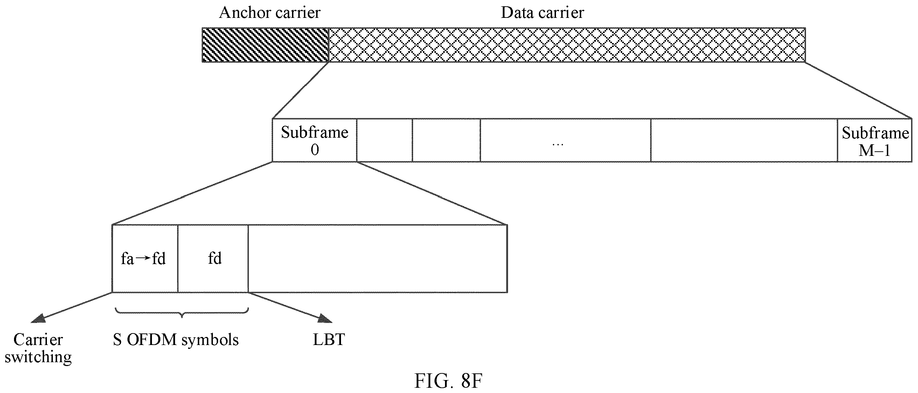

Seventh case: The base station switches from the anchor carrier to the data carrier, and reserves, on the data carrier, a time domain position used for the carrier switching and the LBT detection. The corresponding frequency domain position of the base station during the LBT detection has been the frequency domain position of the data carrier. As shown in FIG. 8F, fd represents the frequency domain position corresponding to the data carrier, and fa represents the frequency domain position corresponding to the anchor carrier.

Eighth case: The base station switches from the anchor carrier to the data carrier, reserves, respectively on the data carrier and the anchor carrier, a part of a time domain position used for the carrier switching, where the length of the two parts of the time domain position is equal to the length of the time domain position required for the carrier switching, and reserves, on the data carrier, a time domain position used for the LBT detection. The corresponding frequency domain position of the base station during the carrier switching has no effect on the solution, and the frequency domain position corresponding to the LBT detection is the frequency domain position of the data carrier.

It should be noted that, in FIG. 8A to FIG. 8F, there is no special description of an uplink-to-downlink switching time or a downlink-to-uplink switching time of the base station or the UE because the uplink-to-downlink switching time or the downlink-to-uplink switching time may occupy a time of the source carrier, or may occupy a time of the target carrier. The processing manner is the same as the manner in which the base station performs the carrier switching. This is not specifically described herein.

It should be noted that the base station may pre-determine, based on a system configuration, the reserved positions of the S OFDM symbols and the value of S of the OFDM symbols. For example, the system configuration includes whether the LBT detection needs to be performed before the data transmission, whether there is mutual switching between uplink and downlink when the carrier switching is performed between the anchor channel and the data channel, and whether duration of the mutual switching between the uplink and the downlink and the duration required for the carrier switching can be overlapped/multiplexed. In a specific implementation, based on the positions of the S OFDM symbols and the value of S of the OFDM symbols, the carrier switching is performed in the S OFDM symbols of the corresponding carrier, or the carrier switching and the LBT detection are performed in the S OFDM symbols of the corresponding carrier. Certainly, the base station may alternatively perform the carrier switching or the LBT detection by randomly selecting any one of the plurality of reserved positions described above. The manner in which the base station selects the reserved position is not limited in the embodiments of this application. Herein, whether the duration of the mutual switching between the uplink and the downlink and the duration required for the carrier switching can be overlapped/multiplexed means that in an actual application, if the duration required for the carrier switching is greater than or equal to the duration of the mutual switching between the uplink and the downlink, and the mutual switching between the uplink and the downlink can be performed in parallel with the carrier switching, only the duration of the carrier switching needs to be considered. Correspondingly, in the foregoing possible values of the quantity S of the OFDM symbols, the duration required for the mutual switching between the uplink and the downlink may no longer need to be considered.

It should be noted that because a position used for the carrier switching is reserved on the carrier, the data on the carrier needs to be processed correspondingly during the data transmission. For example, if the last two OFDM symbols of the last subframe of the data carrier are reserved for the carrier switching, or the first two OFDM symbols of the first subframe of the data carrier are reserved for the carrier switching, during the data transmission on the data carrier, a quantity of OFDM symbols of another subframe is L, and a quantity of OFDM symbols of the last subframe and/or the first subframe is L-2. In this case, either one of the following two processing manners may be used to process the last subframe and/or the first subframe.

First processing manner:

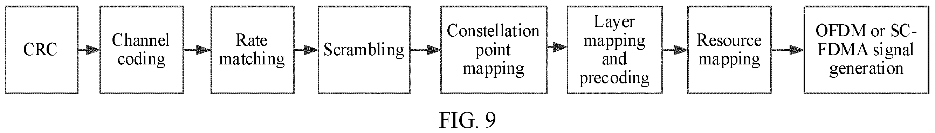

In a wireless communications system, a general procedure of sending the data is shown in FIG. 9. A to-be-sent data block is first processed by encoding, rate matching, and the like, to obtain an initial bit sequence. The initial bit sequence is then mapped to a modulated symbol, to generate a complex-valued modulated symbol. The complex-valued modulated symbol is mapped to a resource unit through layer mapping, precoding processing, and the like, to generate an OFDM signal. The OFDM signal is sent through a physical antenna. Therefore, for the last subframe and/or the first subframe, when actual usable physical resources are calculated through the rate matching, only time frequency resources corresponding to L-2 OFDM symbols are calculated. Correspondingly, during resource mapping, the data is only mapped to time frequency resources corresponding to the first and/or last L-2 OFDM symbols, so that an OFDM signal generation module only calculates the first and/or last L-2 OFDM symbols.

Second processing manner:

The last and/or first two symbols are not considered for the carrier switching. The data is still processed based on the L OFDM symbols during rate matching and resource mapping. However, an OFDM signal generation module does not process and send the last and/or first two symbols.

Certainly, if the frequency hopping communications system uses another scheduling unit, such as a slot or an SC-FDMA symbol, the manner of processing the data corresponding to the reserved position is the same as the processing manner in which the scheduling unit is the OFDM symbol. Details are not described herein again.

Similarly, when the S OFDM symbols are reserved on the anchor carrier, the data on the anchor carrier also needs to be processed correspondingly.

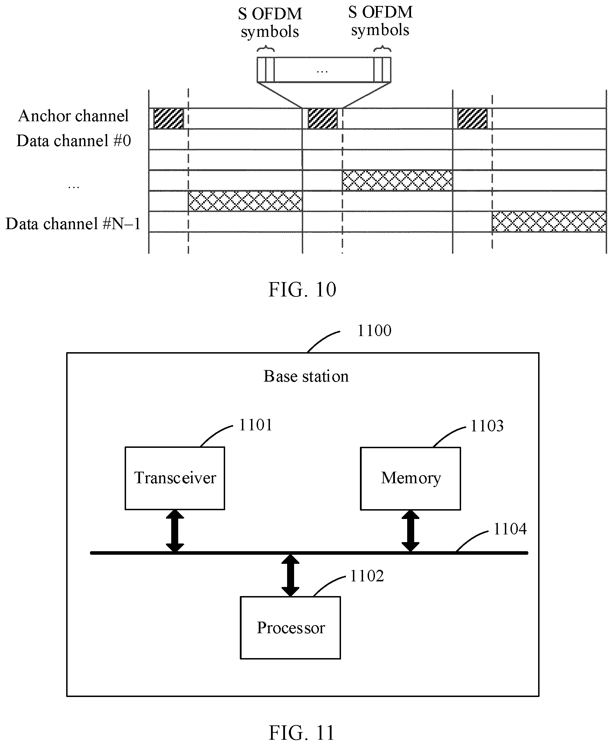

For example, as shown in FIG. 10, if total duration of the anchor channel is Ta, the base station and the UE agree that the first S OFDM symbols and/or the last S OFDM symbols are not used to send the DRS signal in the duration Ta. Alternatively, when the DRS signal is sent in an order of "PSS signal + SSS signal + MIB and/or SIB", the first S OFDM symbols are not used to send the DRS signal. However, when the last S OFDM symbols correspond to the MIB and/or the SIB, a subframe at which the last S symbols are located is processed in the corresponding two manners. First manner: When actual usable physical resources are calculated through the rate matching, only time frequency resources corresponding to L-S OFDM symbols are calculated. Correspondingly, during resource mapping, the data is only mapped to time frequency resources corresponding to the first L-S OFDM symbols of the subframe, so that the OFDM signal generation module only calculates the first L-S OFDM symbols. Second manner: The last S symbols are not considered for the carrier switching. The data is still processed based on the L OFDM symbols during the rate matching and the resource mapping. However, the OFDM signal generation module does not process and send the last S symbols.

After the base station determines a reserved time position used for the carrier switching, a carrier switching process is performed at a corresponding time position. For example, the base station switches from the anchor carrier to the data carrier.

It should be noted that the base station may alternatively perform no carrier switching when communicating with the UE. For example, a system bandwidth supported by the base station is set to a bandwidth of the entire frequency hopping communications system. In this configuration, the base station does not need to perform the carrier switching. That is, step 303 is not a necessary step.

However, in an actual system, most system bandwidths supported by the UE are different from the bandwidth of the entire frequency hopping communications system. Therefore, the UE needs to perform the carrier switching when communicating with the base station in the frequency hopping communications system. In this case, although the base station does not need to perform the carrier switching, when the base station transmits the data with the UE, the positions used for the carrier switching needs to be reserved on the carrier by default, so that no effective data transmission is performed at a corresponding position.

Step 304: The UE performs the carrier switching at a time position reserved on the carrier.

After determining, based on the frequency hopping format, the data carrier to which the UE needs to jump, the UE may perform the carrier switching at a reserved position determined by the UE and the base station, or may perform the carrier switching at a reserved position indicated by the base station. The reserved position is the position reserved by the base station for the carrier switching in step 303.

It should be noted that step 304 may be performed after step 303, or may be performed before step 303. Certainly, step 304 may alternatively be performed simultaneously with step 303. The execution order of step 304 and step 303 is not limited in the embodiments of this application.

Step 305: The base station sends downlink data or receives uplink data on the data carrier.

After switching from the anchor carrier to the data carrier at the reserved position, the base station transmits the data with the UE on the data carrier. It should be noted that if reserved duration corresponding to the position reserved by the base station on the carrier includes duration of the LBT detection, the base station needs to first perform the LBT detection on the frequency domain position corresponding to the data carrier after switching to the data carrier and before sending the data information on the data carrier. When determining that the frequency domain position corresponding to the data carrier is idle, the base station starts to transmit the data on the data carrier. Certainly, it is not necessary for the base station to perform the LBT detection. For example, if the base station only receives the data on the data carrier, the base station may not perform the LBT detection after switching to the data carrier. In a specific implementation, the base station may determine whether the LBT detection needs to be performed based on an actual status.

Step 306: The UE receives the downlink data or sends the uplink data on the data carrier.

After switching from the anchor carrier to the data carrier at the reserved position, the UE transmits the data with the base station on the data carrier. It should be noted that if reserved duration corresponding to the position reserved by the UE on the carrier includes the duration of the LBT detection, the UE needs to first perform the LBT detection on the frequency domain position corresponding to the data carrier after switching to the data carrier and before sending the data on the data carrier. When determining that the frequency domain position corresponding to the data carrier is idle, the UE starts to transmit the data on the data carrier. Certainly, it is not necessary for the UE to perform the LBT detection.

Step 307: The base station transmits data on the data carrier, performs the carrier switching at the position reserved on the data carrier and/or the anchor carrier, and jumps to the anchor carrier.

It should be noted that the base station may alternatively perform no carrier switching. For example, a bandwidth supported by the base station is a bandwidth of a frequency hopping system. Therefore, step 307 is not a necessary step.

Step 308: The UE transmits the data on the data carrier, performs the carrier switching at the position reserved on the data carrier and/or the anchor carrier, and jumps to the anchor carrier, or the UE transmits the data on the data carrier, performs the carrier switching at the position reserved on the data carrier and/or the anchor carrier, and jumps directly to a data carrier in a next cycle T indicated in the frequency hopping format. It should be noted that if the UE directly jumps from the current data carrier to the data carrier in the next cycle T, the UE sends no data in the next cycle T and the duration corresponding to the anchor carrier.

The reserved position used for the carrier switching in step 307 to step 308 is the same as the reserved position used for the carrier switching in step 303. Details are not described herein again.

The base station and the UE complete carrier switching in each cycle T and between neighboring cycles T by repeatedly performing the method shown in FIG. 3, and transmit data on a corresponding carrier.

In the foregoing technical solution, the base station and/or the UE pre-reserve/pre-reserves, on a carrier in a frequency hopping communications system, the position used for the carrier switching. When the base station or the UE needs to perform the carrier switching, the carrier switching is performed at the reserved position without considering types of the data carried on the source carrier and the target carrier, so that there is no need to distinguish between types of physical channels carried on the source carrier and the target carrier, and complexity of the carrier switching can be reduced.

Based on the foregoing embodiment, an embodiment of this application further provides a base station. The base station is configured to implement the carrier switching method on an unlicensed frequency band shown in FIG. 3. Referring to FIG. 11, a base station 1100 includes a transceiver 1101 and a processor 1102.

The transceiver 1101 is configured to perform, based on an indication of the processor 1102, communication with a terminal device by using a first carrier in an unlicensed spectrum, where the base station communicates with the terminal device by occupying, within a scheduling cycle, an anchor carrier and any one of a plurality of data carriers in the unlicensed spectrum; the scheduling cycle includes N time scheduling units; within the scheduling cycle, the anchor carrier occupies the first or last M time scheduling units of the N time scheduling units, and the any data carrier occupies a time scheduling unit other than the first or last M time scheduling units in the N time scheduling units; the first carrier is the anchor carrier or the any data carrier; and the time scheduling unit is a subframe, a slot, an OFDM symbol, or an SC-FDMA symbol, where N and M are positive integers.

The processor 1102 switches from the first carrier to a second carrier within S time scheduling units reserved in the first carrier and/or the second carrier, and continues to communicate with the terminal device by using the second carrier, where the S time scheduling units are pre-configured by the base station and S is an integer greater than 0 and less than N.

Optionally, the network side device 1100 may further include a memory 1103. The memory 1103 may be configured to store a software program. The software program may be executed by the processor 1102, to implement the foregoing data transmission method on an unlicensed frequency band. In addition, the memory 1103 may further store various types of service data or user data.

Optionally, the memory 1103 may include a volatile memory (volatile memory), for example, a random access memory (random-access memory, RAM). The memory may alternatively include a non-volatile memory (non-volatile memory), for example, a flash memory (flash memory, or referred to as flash), a hard disk drive (hard disk drive, HDD), or a solid-state drive (solid-state drive, SSD). The memory 1103 may alternatively include a combination of the foregoing types of memories.

Optionally, the processor 1102 may be a central processing unit (central processing unit, CPU), a network processor (network processor, NP), or a combination of a CPU and an NP. The processor 1102 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL), or any combination thereof.

Optionally, the processor 1102, the transceiver 1101, and the memory 1103 may be connected by using a bus 1104. The bus 1104 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of indication, the bus is indicated by using only one bold line in FIG. 11, but it does not indicate that there is only one bus or one type of bus.

In a possible implementation, the S time scheduling units are S time scheduling units in a plurality of time scheduling units occupied by the first carrier, or the S time scheduling units are S time scheduling units in a plurality of time scheduling units occupied by the second carrier, or the S time scheduling units are S1 time scheduling units in a plurality of time scheduling units occupied by the first carrier and S2 time scheduling units in a plurality of time scheduling units occupied by the second carrier, where S is a sum of S1 and S2, and S1 and S2 are positive integers.

In a possible implementation, the S time scheduling units are the last S time scheduling units in a plurality of time scheduling units occupied by the first carrier, or the S time scheduling units are S time scheduling units that start from the first time scheduling unit in a plurality of time scheduling units occupied by the second carrier, or the S time scheduling units are the last S1 time scheduling units in a plurality of time scheduling units occupied by the first carrier and S2 time scheduling units that start from the first time scheduling unit in a plurality of time scheduling units occupied by the second carrier, where S is a sum of S1 and S2, and S1 and S2 are positive integers.

In a possible implementation, when the first carrier is a data carrier and the second carrier is an anchor carrier, the S time scheduling units are the last S time scheduling units of a plurality of time scheduling units occupied by the data carrier.

In a possible implementation, when the first carrier is an anchor carrier and the second carrier is a data carrier, the S time scheduling units are the last S time scheduling units of a plurality of time scheduling units occupied by the anchor carrier, where no signal is transmitted within the last S time scheduling units of the anchor carrier, duration actually occupied by signal transmission on the anchor carrier is a difference between a window length of the anchor carrier and duration corresponding to the S time scheduling units, and the window length is duration corresponding to

EP 3 678 416 A1

the M time scheduling units occupied by the anchor within the scheduling cycle.

In a possible implementation, when the first carrier is a data carrier and the second carrier is an anchor carrier, the S time scheduling units are the first S time scheduling units that start from the first time scheduling unit in a plurality of time scheduling units occupied by the anchor carrier, where no signal is transmitted within the first S time scheduling units of the anchor carrier, duration actually occupied by signal transmission on the anchor carrier is a difference between a window length of the anchor carrier and duration corresponding to the S time scheduling units, and the window length is duration corresponding to the M time scheduling units occupied by the anchor within the scheduling cycle.

In a possible implementation, when the first carrier is an anchor carrier and the second carrier is a data carrier, the S time scheduling units are the first S time scheduling units that start from the first time scheduling unit in a plurality of time scheduling units occupied by the data carrier.

In a possible implementation, when the first carrier is the anchor carrier or the second carrier is the anchor carrier, the S time scheduling units are the first S time scheduling units that start from the first time scheduling unit in a plurality of time scheduling units occupied by the anchor carrier and the last S time scheduling units of the plurality of time scheduling units occupied by the anchor carrier, where no signal is transmitted within the first S time scheduling units and the last S time scheduling units, duration actually occupied by signal transmission on the anchor carrier is a difference among a window length of the anchor carrier, the first S time scheduling units, and the last S time scheduling units, and the window length is duration corresponding to the M time scheduling units occupied by the anchor within the scheduling cycle.

In a possible implementation, both the first carrier and the second carrier are used for uplink transmission, or both the first carrier and the second carrier are used for downlink transmission; and
the S time scheduling units are at least one continuous time scheduling unit whose total duration is greater than or equal to a first threshold, where the first threshold is a larger value between first preset duration required by the base station to switch a frequency domain position and second preset duration required by the terminal device to switch a frequency domain position.

In a possible implementation, the first carrier is used for uplink transmission and the second carrier is used for downlink transmission; and
the S time scheduling units are at least one continuous time scheduling unit whose total duration is greater than or equal to a sum of a first threshold and a second threshold, where the first threshold is a larger value between first preset duration required by the base station to switch a frequency domain position and second preset duration required by the terminal device to switch a frequency domain position, and the second threshold is a larger value between third preset duration required by the base station to switch from the uplink transmission to the downlink transmission and fourth preset duration required by the terminal device to switch from the uplink transmission to the downlink transmission.

In a possible implementation, the first carrier is used for downlink transmission and the second carrier is used for uplink transmission; and
the S time scheduling units are at least one continuous time scheduling unit whose total duration is greater than or equal to a sum of a first threshold and a third threshold, where the first threshold is a larger value between first preset duration required by the base station to switch a frequency domain position and second preset duration required by the terminal device to switch a frequency domain position, and the third threshold is a larger value between fifth preset duration required by the base station to switch from the downlink transmission to the uplink transmission and sixth preset duration required by the terminal device to switch from the downlink transmission to the uplink transmission.

In a possible implementation, the processor 1102 is further configured to:
perform listen-before-talk detection on the second carrier, and determine whether a frequency domain resource corresponding to the second carrier is occupied, where when no frequency domain resource corresponding to the second carrier is occupied, the processor 1102 communicates with the terminal device by using the second carrier.

In a possible implementation, the duration corresponding to the S time scheduling units further includes duration for performing the listen-before-talk detection.

In a possible implementation, the duration of the listen-before-talk detection is a fourth threshold; and
the S time scheduling units are at least one continuous time scheduling unit whose total duration is greater than or equal to a sum of the first threshold and the fourth threshold; or
the S time scheduling units are at least one continuous time scheduling unit whose total duration is greater than or equal to a sum of the first threshold, the second threshold, and the fourth threshold; or
the S time scheduling units are at least one continuous time scheduling unit whose total duration is greater than or equal to a sum of the first threshold, the third threshold, and the fourth threshold.

In a possible implementation, the second carrier is a data carrier, and the fourth threshold is duration in which the base station performs the listen-before-talk detection in any data carrier; or
the second carrier is an anchor carrier, and the fourth threshold is duration in which the base station performs the listen-before-talk detection on the anchor carrier.

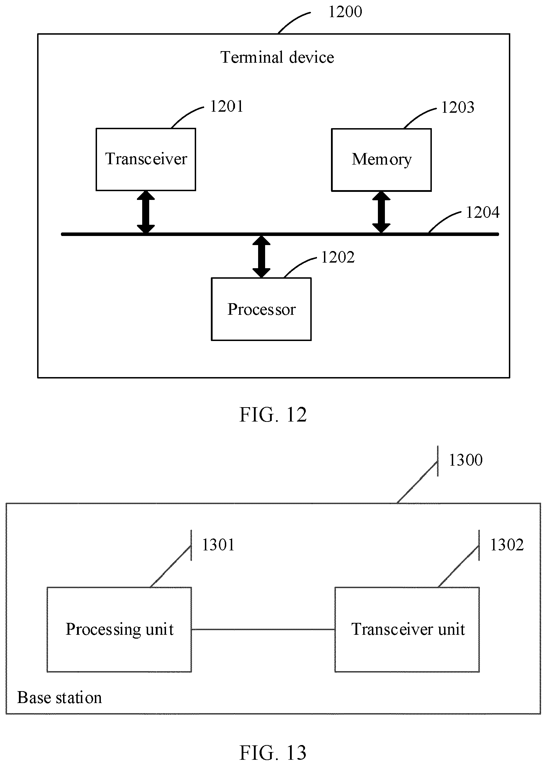

Based on the foregoing embodiment, an embodiment of this application further provides a terminal device. The terminal device is configured to implement the carrier switching method on an unlicensed frequency band shown in FIG. 3. Referring to FIG. 12, the terminal device 1200 includes a transceiver 1201 and a processor 1202.

The transceiver 1201 performs, based on an indication of the processor 1202, communication with a base station by using a first carrier in an unlicensed spectrum, where the base station communicates with the terminal device by occupying, within a scheduling cycle, an anchor carrier and any one of a plurality of data carriers in the unlicensed spectrum; the scheduling cycle includes N time scheduling units; within the scheduling cycle, the anchor carrier occupies the first or last M time scheduling units of the N time scheduling units, and the any data carrier occupies a time scheduling unit other than the first or last M time scheduling units in the N time scheduling units; the first carrier is a carrier indicated by the base station; the anchor carrier and the plurality of data carriers include the first carrier; and the time scheduling unit is a subframe, a slot, an OFDM symbol, or an SC-FDMA symbol, where N and M are positive integers.

The processor 1202 switches from the first carrier to a second carrier within S time scheduling units reserved in the first carrier and/or the second carrier, and continues to communicate with the base station by using the second carrier, where the S time scheduling units are pre-configured by the base station and S is an integer greater than 0 and less than N.

Optionally, the terminal device 1200 may further include a memory 1203. The memory 1203 may be configured to store a software program. The software program may be executed by the processor 1202, to implement the foregoing data transmission method on an unlicensed frequency band. In addition, the memory 1203 may further store various types of service data or user data.

Optionally, the memory 1203 may include a volatile memory, for example, a RAM. The memory 1203 may alternatively include a non-volatile memory, for example, a flash memory, an HDD or an SSD. The memory 1103 may alternatively include a combination of the foregoing memories.

Optionally, the processor 1202 may be a CPU, an NP, or a combination of a CPU and an NP. The processor 1202 may further include a hardware chip. The hardware chip may be an ASIC, a PLD, or a combination thereof. The PLD may be a CPLD, an FPGA, a GAL, or any combination thereof.

Optionally, the processor 1202, the transceiver 1201, and the memory 1203 may be connected by using a bus 1204. The bus 1204 may be a PCI bus, an EISA bus, or the like. The bus may be classified into an address bus, a data bus, a control bus, and the like. For ease of indication, the bus is indicated by using only one bold line in FIG. 12, but it does not indicate that there is only one bus or one type of bus.

In a possible implementation, the S time scheduling units are S time scheduling units in a plurality of time scheduling units occupied by the first carrier, or the S time scheduling units are S time scheduling units in a plurality of time scheduling units occupied by the second carrier, or the S time scheduling units are S1 time scheduling units in a plurality of time scheduling units occupied by the first carrier and S2 time scheduling units in a plurality of time scheduling units occupied by the second carrier, where S is a sum of S1 and S2, and S1 and S2 are positive integers.

In a possible implementation, the S time scheduling units are the last S time scheduling units in a plurality of time scheduling units occupied by the first carrier, or the S time scheduling units are S time scheduling units that start from the first time scheduling unit in a plurality of time scheduling units occupied by the second carrier, or the S time scheduling units are the last S1 time scheduling units in a plurality of time scheduling units occupied by the first carrier and S2 time scheduling units that start from the first time scheduling unit in a plurality of time scheduling units occupied by the second carrier, where S is a sum of S1 and S2, and S1 and S2 are positive integers.

In a possible implementation, when the first carrier is a data carrier and the second carrier is an anchor carrier, the S time scheduling units are the last S time scheduling units of a plurality of time scheduling units occupied by the data carrier.

In a possible implementation, when the first carrier is an anchor carrier and the second carrier is a data carrier, the S time scheduling units are the last S time scheduling units of a plurality of time scheduling units occupied by the anchor carrier, where no signal is transmitted within the last S time scheduling units of the anchor carrier, duration actually occupied by signal transmission on the anchor carrier is a difference between a window length of the anchor carrier and duration corresponding to the S time scheduling units, and the window length is duration corresponding to the M time scheduling units occupied by the anchor within the scheduling cycle.

In a possible implementation, when the first carrier is a data carrier and the second carrier is an anchor carrier, the S time scheduling units are the first S time scheduling units that start from the first time scheduling unit in a plurality of time scheduling units occupied by the anchor carrier, where no signal is transmitted within the first S time scheduling units of the anchor carrier, duration actually occupied by signal transmission on the anchor carrier is a difference between a window length of the anchor carrier and duration corresponding to the S time scheduling units, and the window length is duration corresponding to the M time scheduling units occupied by the anchor within the scheduling cycle.

In a possible implementation, when the first carrier is an anchor carrier and the second carrier is a data carrier, the S time scheduling units are the first S time scheduling units that start from the first time scheduling unit in a plurality of time scheduling units occupied by the data carrier.

In a possible implementation, when the first carrier is the anchor carrier or the second carrier is the anchor carrier, the S time scheduling units are the first S time scheduling units that start from the first time scheduling unit in a plurality of time scheduling units occupied by the anchor carrier and the last S time scheduling units of the plurality of time scheduling units occupied by the anchor carrier, where no signal is transmitted within the first S time scheduling units and the last S time scheduling units, duration actually occupied by signal transmission on the anchor carrier is a difference among a window length of the anchor carrier, the first S time scheduling units, and the last S time scheduling units, and the window length is duration corresponding to the M time scheduling units occupied by the anchor within the scheduling cycle.

In a possible implementation, both the first carrier and the second carrier are used for uplink transmission, or both the first carrier and the second carrier are used for downlink transmission; and

the S time scheduling units are at least one continuous time scheduling unit whose total duration is greater than or equal to a first threshold, where the first threshold is a larger value between first preset duration required by the base station to switch a frequency domain position and second preset duration required by the terminal device to switch a frequency domain position.

In a possible implementation, the first carrier is used for uplink transmission and the second carrier is used for downlink transmission; and

the S time scheduling units are at least one continuous time scheduling unit whose total duration is greater than or equal to a sum of a first threshold and a second threshold, where the first threshold is a larger value between first preset duration required by the base station to switch a frequency domain position and second preset duration required by the terminal device to switch a frequency domain position, and the second threshold is a larger value between third preset duration required by the base station to switch from the uplink transmission to the downlink transmission and fourth preset duration required by the terminal device to switch from the uplink transmission to the downlink transmission.

In a possible implementation, the first carrier is used for downlink transmission and the second carrier is used for uplink transmission; and

the S time scheduling units are at least one continuous time scheduling unit whose total duration is greater than or equal to a sum of a first threshold and a third threshold, where the first threshold is a larger value between first preset duration required by the base station to switch a frequency domain position and second preset duration required by the terminal device to switch a frequency domain position, and the third threshold is a larger value between fifth preset duration required by the base station to switch from the downlink transmission to the uplink transmission and sixth preset duration required by the terminal device to switch from the downlink transmission to the uplink transmission.

In a possible implementation, the processor 1202 is further configured to:

perform, by the terminal device, listen-before-talk detection on the second carrier, and determine whether a frequency domain resource corresponding to the second carrier is occupied, where when no frequency domain resource corresponding to the second carrier is occupied, the terminal device communicates with the base station by using the second carrier.

In a possible implementation, the duration corresponding to the S time scheduling units further includes duration for performing the listen-before-talk detection.

In a possible implementation, the duration of the listen-before-talk detection is a fourth threshold; and

the S time scheduling units are at least one continuous time scheduling unit whose total duration is greater than or equal to a sum of the first threshold and the fourth threshold; or

the S time scheduling units are at least one continuous time scheduling unit whose total duration is greater than or equal to a sum of the first threshold, the second threshold, and the fourth threshold; or

the S time scheduling units are at least one continuous time scheduling unit whose total duration is greater than or equal to a sum of the first threshold, the third threshold, and the fourth threshold.

In a possible implementation, the second carrier is a data carrier, and the fourth threshold is duration in which the terminal device performs the listen-before-talk detection in any data carrier; or

the second carrier is an anchor carrier, and the fourth threshold is duration in which the terminal device performs the listen-before-talk detection on the anchor carrier.

FIG. 13 is a schematic structural diagram of a base station 1300. The base station 1300 may implement a function of the base station described above. The base station 1300 includes a processing unit 1301 and a transceiver unit 1302. The processing unit 1301 may be configured to perform step 303 and step 307 in the embodiment shown in FIG. 3, and/or configured to support another process of the technology described in this specification. The transceiver unit 1302 may be configured to perform step 301, step 305, and step 306 in the embodiment shown in FIG. 3, and/or configured to support another process of the technology described in this specification. For the functional descriptions of the corresponding functional modules, refer to all related content of the steps in the foregoing method embodiments, and details are not described herein again.

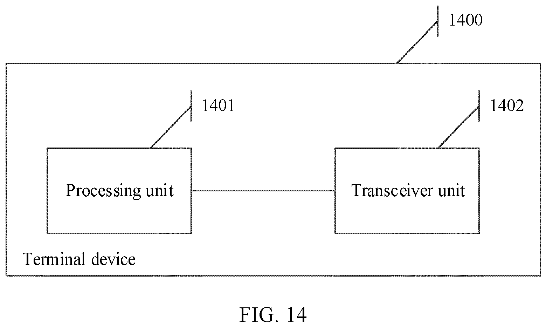

FIG. 14 is a schematic structural diagram of a terminal device 1400. The terminal device 1400 may implement a function of the terminal device described above. The terminal device 1400 includes a processing unit 1401 and a transceiver unit 1402. The processing unit 1401 may be configured to perform step 304 and step 308 in the embodiment shown in FIG. 3, and/or configured to support another process of the technology described in this specification. The transceiver unit 1402 may be configured to perform step 302, step 305, and step 306 in the embodiment shown in FIG. 3, and/or configured to support another process of the technology described in this specification. For the functional descriptions of the corresponding functional modules, refer to all related content of the steps in the foregoing method embodiments, and details are not described herein again.

The terminal device and the base station provided in this application may be a chip system. The chip system may include at least one chip, or may include another discrete device. The chip system may be disposed in the terminal device or the base station, to support the terminal device or the base station in performing the carrier switching method on an unlicensed spectrum according to the embodiments of this application.

An embodiment of this application provides a computer storage medium. The computer storage medium stores an instruction. When run on a computer, the instruction enables the computer to perform the foregoing carrier switching method on an unlicensed spectrum.

An embodiment of this application provides a computer program product. The computer program product stores an instruction. When run on a computer, the instruction enables the computer to perform the foregoing carrier switching method on an unlicensed spectrum.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, all or some of the processes or functions according to the embodiments of this application are generated. The computer may be a general-purpose computer, a dedicated computer, a computer network, or another programmable apparatus. The computer instructions may be stored in a computer-readable storage medium or may be transmitted from a computer-readable storage medium to another readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid State Disk, SSD)), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A carrier switching method on an unlicensed spectrum, comprising:

   performing, by a base station, communication with a terminal device by using a first carrier in an unlicensed spectrum, wherein the base station communicates with the terminal device by occupying, within a scheduling cycle, an anchor carrier and any one of a plurality of data carriers in the unlicensed spectrum; the scheduling cycle comprises N time scheduling units; within the scheduling cycle, the anchor carrier occupies the first or last M time scheduling units of the N time scheduling units, and the any data carrier occupies a time scheduling unit other than the first or last M time scheduling units in the N time scheduling units; the first carrier is the anchor carrier or the any data carrier; and the time scheduling unit is a subframe, a slot, an OFDM symbol, or an SC-FDMA symbol, wherein N and M are positive integers; and
   switching, by the base station, from the first carrier to a second carrier within S time scheduling units reserved in the first carrier and/or the second carrier, and continuing to communicate with the terminal device by using the second carrier, wherein the S time scheduling units are pre-configured by the base station and S is an integer greater than 0 and less than N.

2. The method according to claim 1, wherein when the first carrier is a data carrier and the second carrier is an anchor carrier, the S time scheduling units are the last S time scheduling units of a plurality of time scheduling units occupied by the data carrier.

3. The method according to claim 1, wherein when the first carrier is an anchor carrier and the second carrier is a data carrier, the S time scheduling units are the last S time scheduling units of a plurality of time scheduling units occupied by the anchor carrier, wherein no signal is transmitted within the last S time scheduling units of the anchor carrier, duration actually occupied by signal transmission on the anchor carrier is a difference between a window length of the anchor carrier and duration corresponding to the S time scheduling units, and the window length is duration corresponding to the M time scheduling units occupied by the anchor within the scheduling cycle.

4. The method according to claim 1, wherein when the first carrier is a data carrier and the second carrier is an anchor carrier, the S time scheduling units are the first S time scheduling units that start from the first time scheduling unit in a plurality of time scheduling units occupied by the anchor carrier, wherein no signal is transmitted within the first S time scheduling units of the anchor carrier, duration actually occupied by signal transmission on the anchor carrier is a difference between a window length of the anchor carrier and duration corresponding to the S time scheduling units, and the window length is duration corresponding to the M time scheduling units occupied by the anchor within the scheduling cycle.

5. The method according to claim 1, wherein when the first carrier is the anchor carrier or the second carrier is the anchor carrier, the S time scheduling units are the first S time scheduling units that start from the first time scheduling unit in a plurality of time scheduling units occupied by the anchor carrier and the last S time scheduling units of the plurality of time scheduling units occupied by the anchor carrier, wherein no signal is transmitted within the first S time scheduling units and the last S time scheduling units, duration actually occupied by signal transmission on the anchor carrier is a difference among a window length of the anchor carrier, the first S time scheduling units, and the last S time scheduling units, and the window length is duration corresponding to the M time scheduling units occupied by the anchor within the scheduling cycle.

6. The method according to any one of claims 1 to 5, wherein the first carrier is used for uplink transmission and the second carrier is used for downlink transmission; and
the S time scheduling units are at least one continuous time scheduling unit whose total duration is greater than or equal to a sum of a first threshold and a second threshold, wherein the first threshold is a larger value between first preset duration required by the base station to switch a frequency domain position and second preset duration required by the terminal device to switch a frequency domain position, and the second threshold is a larger value between third preset duration required by the base station to switch from the uplink transmission to the downlink transmission and fourth preset duration required by the terminal device to switch from the uplink transmission to the downlink transmission.

7. The method according to any one of claims 1 to 6, wherein after the switching, by the base station, from the first carrier to the second carrier, the method further comprises:
performing, by the base station, listen-before-talk detection on the second carrier, and determining whether a frequency domain resource corresponding to the second carrier is occupied, wherein when no frequency domain resource corresponding to the second carrier is occupied, the base station communicates with the terminal device by using the second carrier.

8. The method according to claim 7, wherein the duration corresponding to the S time scheduling units further comprises duration for performing the listen-before-talk detection.

9. A carrier switching method on an unlicensed spectrum, comprising:

performing, by a terminal device, communication with a base station by using a first carrier in an unlicensed spectrum, wherein the base station communicates with the terminal device by occupying, within a scheduling cycle, an anchor carrier and any one of a plurality of data carriers in the unlicensed spectrum; the scheduling cycle comprises N time scheduling units; within the scheduling cycle, the anchor carrier occupies the first or last M time scheduling units of the N time scheduling units, and the any data carrier occupies a time scheduling unit other than the first or last M time scheduling units in the N time scheduling units; the first carrier is a carrier indicated by the base station; the anchor carrier and the plurality of data carriers comprise the first carrier; and the time scheduling unit is a subframe, a slot, an OFDM symbol, or an SC-FDMA symbol, where N and M are positive integers; and
switching, by the terminal device, from the first carrier to a second carrier within S time scheduling units reserved in the first carrier and/or the second carrier, and continuing to communicate with the base station by using the second carrier, wherein the S time scheduling units are pre-configured by the base station and S is an integer greater than 0 and less than N.

**10.** The method according to claim 9, wherein when the first carrier is a data carrier and the second carrier is an anchor carrier, the S time scheduling units are the last S time scheduling units of a plurality of time scheduling units occupied by the data carrier.

**11.** The method according to claim 9, wherein when the first carrier is an anchor carrier and the second carrier is a data carrier, the S time scheduling units are the last S time scheduling units of a plurality of time scheduling units occupied by the anchor carrier, wherein no signal is transmitted within the last S time scheduling units of the anchor carrier, duration actually occupied by signal transmission on the anchor carrier is a difference between a window length of the anchor carrier and duration corresponding to the S time scheduling units, and the window length is duration corresponding to the M time scheduling units occupied by the anchor within the scheduling cycle.

**12.** The method according to claim 9, wherein when the first carrier is a data carrier and the second carrier is an anchor carrier, the S time scheduling units are the first S time scheduling units that start from the first time scheduling unit in a plurality of time scheduling units occupied by the anchor carrier, wherein no signal is transmitted within the first S time scheduling units of the anchor carrier, duration actually occupied by signal transmission on the anchor carrier is a difference between a window length of the anchor carrier and duration corresponding to the S time scheduling units, and the window length is duration corresponding to the M time scheduling units occupied by the anchor within the scheduling cycle.

**13.** The method according to claim 9, wherein when the first carrier is the anchor carrier or the second carrier is the anchor carrier, the S time scheduling units are the first S time scheduling units that start from the first time scheduling unit in a plurality of time scheduling units occupied by the anchor carrier and the last S time scheduling units of the plurality of time scheduling units occupied by the anchor carrier, wherein no signal is transmitted within the first S time scheduling units and the last S time scheduling units, duration actually occupied by signal transmission on the anchor carrier is a difference among a window length of the anchor carrier, the first S time scheduling units, and the last S time scheduling units, and the window length is duration corresponding to the M time scheduling units occupied by the anchor within the scheduling cycle.

**14.** The method according to any one of claims 9 to 13, wherein the first carrier is used for uplink transmission and the second carrier is used for downlink transmission; and
the S time scheduling units are at least one continuous time scheduling unit whose total duration is greater than or equal to a sum of a first threshold and a second threshold, wherein the first threshold is a larger value between first preset duration required by the base station to switch a frequency domain position and second preset duration required by the terminal device to switch a frequency domain position, and the second threshold is a larger value between third preset duration required by the base station to switch from the uplink transmission to the downlink transmission and fourth preset duration required by the terminal device to switch from the uplink transmission to the downlink transmission.

**15.** The method according to any one of claims 9 to 14, wherein after the switching, by the base station, from the first carrier to the second carrier, the method further comprises:
performing, by the terminal device, listen-before-talk detection on the second carrier, and determining whether a frequency domain resource corresponding to the second carrier is occupied, wherein when no frequency domain resource corresponding to the second carrier is occupied, the terminal device communicates with the base station by using the second carrier.

**16.** The method according to claim 15, wherein the duration corresponding to the S time scheduling units further comprises duration for performing the listen-before-talk detection.

**17.** A base station, comprising a processor and a transceiver, wherein
the transceiver performs, under control of the processor, communication with a terminal device by using a first carrier in an unlicensed spectrum, wherein the base station communicates with the terminal device by occupying, within a scheduling cycle, an anchor carrier and any one of a plurality of data carriers in the unlicensed spectrum; the scheduling cycle comprises N time scheduling units; within the scheduling cycle, the anchor carrier occupies the first or last M time scheduling units of the N time scheduling units, and the any data carrier occupies a time scheduling unit other than the first or last M time scheduling units in the N time scheduling units; the first carrier is the anchor carrier or the any data carrier; and the time scheduling unit is a subframe, a slot, an OFDM symbol, or an SC-FDMA symbol, where N and M are positive integers; and
the processor switches from the first carrier to a second carrier within S time scheduling units reserved in the first carrier and/or the second carrier, and continues to communicate with the terminal device by using the second carrier, wherein the S time scheduling units are pre-configured by the base station and S is an integer greater than 0 and less than N.

18. The base station according to claim 17, wherein when the first carrier is a data carrier and the second carrier is an anchor carrier, the S time scheduling units are the last S time scheduling units of a plurality of time scheduling units occupied by the data carrier.

19. The base station according to claim 17, wherein when the first carrier is an anchor carrier and the second carrier is a data carrier, the S time scheduling units are the last S time scheduling units of a plurality of time scheduling units occupied by the anchor carrier, wherein no signal is transmitted within the last S time scheduling units of the anchor carrier, duration actually occupied by signal transmission on the anchor carrier is a difference between a window length of the anchor carrier and duration corresponding to the S time scheduling units, and the window length is duration corresponding to the M time scheduling units occupied by the anchor within the scheduling cycle.

20. The base station according to claim 17, wherein when the first carrier is a data carrier and the second carrier is an anchor carrier, the S time scheduling units are the first S time scheduling units that start from the first time scheduling unit in a plurality of time scheduling units occupied by the anchor carrier, wherein no signal is transmitted within the first S time scheduling units of the anchor carrier, duration actually occupied by signal transmission on the anchor carrier is a difference between a window length of the anchor carrier and duration corresponding to the S time scheduling units, and the window length is duration corresponding to the M time scheduling units occupied by the anchor within the scheduling cycle.

21. The base station according to claim 17, wherein when the first carrier is the anchor carrier or the second carrier is the anchor carrier, the S time scheduling units are the first S time scheduling units that start from the first time scheduling unit in a plurality of time scheduling units occupied by the anchor carrier and the last S time scheduling units of the plurality of time scheduling units occupied by the anchor carrier, wherein no signal is transmitted within the first S time scheduling units and the last S time scheduling units, duration actually occupied by signal transmission on the anchor carrier is a difference among a window length of the anchor carrier, the first S time scheduling units, and the last S time scheduling units, and the window length is duration corresponding to the M time scheduling units occupied by the anchor within the scheduling cycle.

22. The base station according to any one of claims 17 to 21, wherein the first carrier is used for uplink transmission and the second carrier is used for downlink transmission; and
the S time scheduling units are at least one continuous time scheduling unit whose total duration is greater than or equal to a sum of a first threshold and a second threshold, wherein the first threshold is a larger value between first preset duration required by the base station to switch a frequency domain position and second preset duration required by the terminal device to switch a frequency domain position, and the second threshold is a larger value between third preset duration required by the base station to switch from the uplink transmission to the downlink transmission and fourth preset duration required by the terminal device to switch from the uplink transmission to the downlink transmission.

23. The base station according to any one of claims 17 to 22, wherein after the base station switches from the first carrier to the second carrier, the method further comprises:

performing, by the base station, listen-before-talk detection on the second carrier, and determining whether a frequency domain resource corresponding to the second carrier is occupied, wherein when no frequency domain resource corresponding to the second carrier is occupied, the base station communicates with the terminal device by using the second carrier; and
correspondingly, the duration corresponding to the S time scheduling units further comprises duration for performing the listen-before-talk detection.

24. A terminal device, comprising a processor and a transceiver, wherein
the transceiver performs, under control of the processor, communication with a base station by using a first carrier in an unlicensed spectrum, wherein the base station communicates with the terminal device by occupying, within a scheduling cycle, an anchor carrier and any one of a plurality of data carriers in the unlicensed spectrum; the scheduling cycle comprises N time scheduling units; within the scheduling cycle, the anchor carrier occupies the first or last M time scheduling units of the N time scheduling units, and the any data carrier occupies a time scheduling unit other than the first or last M time scheduling units in the N time scheduling units; the first carrier is a carrier indicated by the base station; the anchor carrier and the plurality of data carriers comprise the first carrier; and the time scheduling unit is a subframe, a slot, an OFDM symbol, or an SC-FDMA symbol, where N and M are positive integers; and

the processor switches from the first carrier to a second carrier within S time scheduling units reserved in the first carrier and/or the second carrier, and continues to communicate with the base station by using the second carrier, wherein the S time scheduling units are pre-configured by the base station and S is an integer greater than 0 and less than N.

25. The terminal device according to claim 24, wherein when the first carrier is a data carrier and the second carrier is an anchor carrier, the S time scheduling units are the last S time scheduling units of a plurality of time scheduling units occupied by the data carrier.

26. The terminal device according to claim 24, wherein when the first carrier is an anchor carrier and the second carrier is a data carrier, the S time scheduling units are the last S time scheduling units of a plurality of time scheduling units occupied by the anchor carrier, wherein no signal is transmitted within the last S time scheduling units of the anchor carrier, duration actually occupied by signal transmission on the anchor carrier is a difference between a window length of the anchor carrier and duration corresponding to the S time scheduling units, and the window length is duration corresponding to the M time scheduling units occupied by the anchor within the scheduling cycle.

27. The terminal device according to claim 24, wherein when the first carrier is a data carrier and the second carrier is an anchor carrier, the S time scheduling units are the first S time scheduling units that start from the first time scheduling unit in a plurality of time scheduling units occupied by the anchor carrier, wherein no signal is transmitted within the first S time scheduling units of the anchor carrier, duration actually occupied by signal transmission on the anchor carrier is a difference between a window length of the anchor carrier and duration corresponding to the S time scheduling units, and the window length is duration corresponding to the M time scheduling units occupied by the anchor within the scheduling cycle.

28. The terminal device according to claim 24, wherein when the first carrier is the anchor carrier or the second carrier is the anchor carrier, the S time scheduling units are the first S time scheduling units that start from the first time scheduling unit in a plurality of time scheduling units occupied by the anchor carrier and the last S time scheduling units of the plurality of time scheduling units occupied by the anchor carrier, wherein no signal is transmitted within the first S time scheduling units and the last S time scheduling units, duration actually occupied by signal transmission on the anchor carrier is a difference among a window length of the anchor carrier, the first S time scheduling units, and the last S time scheduling units, and the window length is duration corresponding to the M time scheduling units occupied by the anchor within the scheduling cycle.

29. The terminal device according to any one of claims 24 to 28, wherein the first carrier is used for uplink transmission and the second carrier is used for downlink transmission; and

the S time scheduling units are at least one continuous time scheduling unit whose total duration is greater than or equal to a sum of a first threshold and a second threshold, wherein the first threshold is a larger value between first preset duration required by the base station to switch a frequency domain position and second preset duration required by the terminal device to switch a frequency domain position, and the second threshold is a larger value between third preset duration required by the base station to switch from the uplink transmission to the downlink transmission and fourth preset duration required by the terminal device to switch from the uplink transmission to the downlink transmission.

30. The terminal device according to any one of claims 24 to 29, wherein after the base station switches from the first carrier to the second carrier, the method further comprises:

performing, by the terminal device, listen-before-talk detection on the second carrier, and determining whether a frequency domain resource corresponding to the second carrier is occupied, wherein when no frequency domain resource corresponding to the second carrier is occupied, the terminal device communicates with the base station by using the second carrier; and

correspondingly, the duration corresponding to the S time scheduling units further comprises duration for performing the listen-before-talk detection.

FIG. 1

FIG. 2

| Base station | | UE |
|---|---|---|

301: Send a DRS by using an
anchor carrier

302: Receive the DRS and determine a
frequency hopping format

303: Perform carrier switching at a reserved
position to switch to a data carrier

304: Perform the carrier switching at the
reserved position to switch to the data carrier

305: The base station transmits
data on the data carrier

306: The UE transmits data on the data carrier

307: Perform the carrier switching at the
reserved position to switch to the anchor carrier

308: Perform the carrier switching at the
reserved position to switch to the anchor
carrier or a next data carrier

FIG. 3

Anchor carrier        Data carrier

| Subframe 0 | | | ... | | | Subframe M−1 |

| OFDM #0 | OFDM #1 | ... | OFDM #13 |

S OFDM symbols

FIG. 4A

Anchor carrier        Data carrier

| Subframe 0 | Subframe 1 | ... | Subframe N−1 |

| OFDM #0 | OFDM #1 | ... | OFDM #13 |

S OFDM symbols

FIG. 4B

Anchor carrier                                          Data carrier

| Subframe 0 | | | ... | Subframe M−1 | Subframe 0 | Subframe 1 | ... | Subframe N−1 |

| OFDM #0 | ... | OFDM #13 | OFDM #0 | ... | OFDM #13 |

S OFDM symbols

FIG. 4C

Data carrier                                                      Anchor carrier

Subframe 0 | | | ... | | | Subframe N−1

OFDM #0 | OFDM #1 | ... | OFDM #13

S OFDM symbols

FIG. 5A

Data carrier                                                      Anchor carrier

Subframe 0 | Subframe 1 | ... | Subframe M−1

OFDM #0 | OFDM #1 | ... | OFDM #13

S OFDM symbols

FIG. 5B

Data carrier                                                                    Anchor carrier

| Subframe 0 | | | ... | Subframe N−1 | Subframe 0 | Subframe 1 | ... | Subframe M−1 |

| OFDM #0 | ... | OFDM #13 | OFDM #0 | ... | OFDM# 13 |

S OFDM symbols

FIG. 5C

FIG. 6A

FIG. 6B

FIG. 6C

FIG. 7A

FIG. 7B

Data carrier           Anchor carrier

| Subframe 0 | | | ... | | Subframe N−1 |

| fd | fd→fa | fa |

Carrier switching    S OFDM symbols    LBT

FIG. 8A

Data carrier           Anchor carrier

| Subframe 0 | | | ... | | Subframe N−1 | |

| fd | fd→fa | fa | |

Carrier switching    S OFDM symbols    LBT

FIG. 8B

Data carrier                                    Anchor carrier

Subframe | | | ... | | Subframe
0        | | |     | | M−1

fd→fa | fa |

Carrier      S OFDM symbols      LBT
switching

FIG. 8C

EP 3 678 416 A1

Anchor carrier    Data carrier

Subframe 0 | | | ... | | Subframe M−1

fa | fa→fd | fd

Carrier switching    S OFDM symbols    LBT

FIG. 8D

Anchor carrier    Data carrier

Subframe 0 | | | ... | Subframe M−1 |

fa | fa→fd | fd |

Carrier switching    S OFDM symbols    LBT

FIG. 8E

Anchor carrier                    Data carrier

| Subframe 0 | | | ... | | Subframe M−1 |
|---|---|---|---|---|---|

| fa→fd | fd | |
|---|---|---|

Carrier
switching

S OFDM symbols

LBT

FIG. 8F

CRC → Channel coding → Rate matching → Scrambling → Constellation point mapping → Layer mapping and precoding → Resource mapping → OFDM or SC-FDMA signal generation

FIG. 9

S OFDM
symbols

S OFDM
symbols

Anchor channel

Data channel #0

...

Data channel #N−1

FIG. 10

1100

Base station

1101

Transceiver

1103

Memory

1104

1102

Processor

FIG. 11

1200

Terminal device

1201

Transceiver

1203

Memory

1204

1202

Processor

FIG. 12

1300

1301

Processing unit

1302

Transceiver unit

Base station

FIG. 13

1400

1401

1402

Processing unit

Transceiver unit

Terminal device

FIG. 14

## INTERNATIONAL SEARCH REPORT

| International application No. |
| --- |
| **PCT/CN2017/103829** |

| A. | CLASSIFICATION OF SUBJECT MATTER |
| --- | --- |

H04W 36/28(2009.01)i;  H04W 36/38(2009.01)i

According to International Patent Classification (IPC) or to both national classification and IPC

| B. | FIELDS SEARCHED |
| --- | --- |

Minimum documentation searched (classification system followed by classification symbols)

H04W; H04Q; H04L

Documentation searched other than minimum documentation to the extent that such documents are included in the fields searched

Electronic data base consulted during the international search (name of data base and, where practicable, search terms used)

CNABS; CNTXT; CNKI; VEN; USTXT; EPTXT; WOTXT; IEEE; 3GPP: 非授权频谱, 非授权频段, 切换, 锚点, 载波, 聚合, 分量, 多载波, 调度, 时隙, 符号, 帧; unlicensed, spectrum, frequency, band, handover, handoff, anchor, carrier, CA, CC, component, aggregation, schedule, slot, symbol, frame

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 102457924 A (HUAWEI TECHNOLOGIES CO., LTD.) 16 May 2012 (2012-05-16) description, paragraphs [0006]-[0026] and [0059]-[0073], and figure 1 | 1-30 |
| A | CN 104620649 A (HUAWEI TECHNOLOGIES CO., LTD.) 13 May 2015 (2015-05-13) entire document | 1-30 |
| A | CN 105592478 A (ZTE CORPORATION) 18 May 2016 (2016-05-18) entire document | 1-30 |
| A | US 2016183131 A1 (ALCATEL-LUCENT USA, INC.) 23 June 2016 (2016-06-23) entire document | 1-30 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **11 June 2018** | **21 June 2018** |

| Name and mailing address of the ISA/CN | Authorized officer |
| --- | --- |
| **State Intellectual Property Office of the P. R. China** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2017/103829**

| Patent document cited in search report | | | Publication date (day/month/year) | Patent family member(s) | | | Publication date (day/month/year) |
|---|---|---|---|---|---|---|---|
| CN | 102457924 | A | 16 May 2012 | US | 2016360460 | A1 | 08 December 2016 |
| | | | | WO | 2012051903 | A1 | 26 April 2012 |
| | | | | US | 2013230022 | A1 | 05 September 2013 |
| | | | | EP | 2618609 | A4 | 04 December 2013 |
| | | | | CN | 102457924 | B | 03 December 2014 |
| | | | | US | 9973991 | B2 | 15 May 2018 |
| | | | | US | 9445333 | B2 | 13 September 2016 |
| | | | | EP | 2618609 | A1 | 24 July 2013 |
| CN | 104620649 | A | 13 May 2015 | KR | 101796880 | B1 | 10 November 2017 |
| | | | | JP | 2016532376 | A | 13 October 2016 |
| | | | | EP | 3018955 | A4 | 06 July 2016 |
| | | | | KR | 20160039279 | A | 08 April 2016 |
| | | | | US | 2016165612 | A1 | 09 June 2016 |
| | | | | JP | 6173596 | B2 | 02 August 2017 |
| | | | | EP | 3018955 | A1 | 11 May 2016 |
| | | | | CA | 2920440 | A1 | 19 February 2015 |
| | | | | US | 9961684 | B2 | 01 May 2018 |
| | | | | WO | 2015021623 | A1 | 19 February 2015 |
| CN | 105592478 | A | 18 May 2016 | WO | 2016070607 | A1 | 12 May 2016 |
| US | 2016183131 | A1 | 23 June 2016 | WO | 2016100150 | A3 | 11 August 2016 |
| | | | | WO | 2016100150 | A2 | 23 June 2016 |

Form PCT/ISA/210 (patent family annex) (January 2015)